# EUROPEAN PATENT APPLICATION

(11) **EP 4 723 590 A1**
(43) Date of publication of application: **08.04.2026**
(21) Application number: 24933123.2
(22) Date of filing: 04.12.2024
(51) Int. Cl.: H04L 49/111

(54) **INTERCONNECTION APPARATUS, HIGH-PERFORMANCE SWITCHING APPARATUS, AND LARGE-MODEL ALL-IN-ONE MACHINE**

(30) Priority: 29.03.2024 CN 202410382097
(71) Applicant: Suzhou Metabrain Intelligent Technology Co., Ltd., Suzhou, Jiangsu 215000 (CN)
(72) Inventor: GAO, Xianyang, Suzhou, Jiangsu 215000 (CN); CI, Tanlong, Suzhou, Jiangsu 215000 (CN); WU, An, Suzhou, Jiangsu 215000 (CN); XU, Tong, Suzhou, Jiangsu 215000 (CN)
(74) Representative: Studio Torta S.p.A.
(86) International application number: PCT/CN2024/136883
(87) International publication number: WO 2025/200556

(57) **Abstract**

This application discloses an interconnection apparatus, a high-performance switching apparatus, and a large model all-in-one machine, and relates to the communication field, to solve the problems of low interconnection speed and low communication bandwidth among a plurality of cards within a large model all-in-one machine. The interconnection apparatus includes a plurality of switching devices. Each of the plurality of switching devices includes a plurality of external interfaces and a plurality of interconnection interfaces. The interconnection interfaces of a first switching device are selectively connected to the interconnection interfaces of a second switching device. The first switching device further includes an embedded controller, configured to receive topology configuration information, and when determining based on the topology configuration information that a target interfaces exists among the plurality of interconnection interfaces of the first switching device in which the embedded controller is located, control the one or more target interfaces to establish connections with corresponding interconnection interfaces of the second switching device in a one-to-one correspondence, to interconnect any two of of external devices connected to the plurality of switching devices. This application can flexibly adjust an interconnection topology architecture to achieve full interconnection among all devices on the interconnection topology architecture and enhance interconnection rate and communication bandwidth.

## Description

### Cross-Reference to Related Application

This application claims priority to Chinese Patent Application No. 202410382097.0, filed with the China National Intellectual Property Administration on March 29, 2024, and entitled "INTERCONNECTION APPARATUS, HIGH-PERFORMANCE SWITCHING APPARATUS, AND LARGE MODEL ALL-IN-ONE MACHINE", which is incorporated herein by reference in its entirety.

### Technical Field

This application relates to the field of communications, and in particular, to an interconnection apparatus, a high-performance switching apparatus, and a large model all-in-one machine.

### Background

With the rapid advancement of artificial intelligence (Al) large models, the customer concentration for foundational large model pre-training will increase. The majority of customer business scenarios will involve fine-tuning and inference applications based on foundational large models. In response to characteristics of computing power requirements for large model pre-training and fine-tuning applications, when designing an Al large model all-in-one machine, a large-scale multi-card mode is adopted to enhance computing power. That is, a plurality of graphics processing units (GPUs) are included, and divided into a plurality of groups. Within each group, any two GPUs can interconnect, but GPUs in different groups cannot interconnect, resulting in low interconnection rate and communication bandwidth, as well as poor communication performance.

Therefore, how to provide a solution to solve the above-mentioned technical problems is currently a problem to be solved by those skilled in the art.

### Summary

An objective of this application is to provide an interconnection apparatus, a high-performance switching apparatus, and a large model all-in-one machine, which can flexibly adjust an interconnection topology architecture to achieve full interconnection among all devices on the interconnection topology architecture and enhance interconnection rate and communication bandwidth.

In order to solve the above-mentioned technical problems, in a first aspect, an embodiment of this application provides an interconnection apparatus, including a plurality of switching devices, wherein each switching device of the plurality of switching devices includes a plurality of external interfaces and a plurality of interconnection interfaces, each of the external interfaces of the switching device is configured to connect to an external device, an interconnection interface of a first switching device is selectively connected to an interconnection interface of a second switching device, the first switching device is any one of the plurality of switching devices, and the second switching device is any one of the plurality of switching devices other than the first switching device; and
the first switching device further includes an embedded controller, the embedded controller is configured to receive topology configuration information, and control, in a case where it is determined based on the topology configuration information that a target interface exists among the plurality of interconnection interfaces of the first switching device in which the embedded controller is located, the target interface to connect to the interconnection interface of the second switching device, so as to interconnect any two of external devices connected to the plurality of switching devices.

The embedded controller is further configured to enumerate external devices connected to the first switching device in which the embedded controller is located and external devices connected to the second switching device that is connected to the target interface to determine global identifiers including a global identifier of each external device among the external devices connected to the first switching device and the external devices connected to the second switching device, and establish an internal routing table based on the global identifiers to transmit received data using the internal routing table, wherein the global identifier of the external device includes a device identifier of the external device and a device identifier of a switching device to which the external device is connected.

The embedded controller is further configured to receive interface configuration information, and adjust one or more interface parameters of one or more external interfaces of the plurality of external interfaces of the first switching device based on the interface configuration information, to make the adjusted one or more interface parameters of the one or more external interfaces match one or more communication parameters of one or more external devices connected to the one or more external interfaces.

In a case where it is determined based on the topology configuration information that a target interface exists among the plurality of interconnection interfaces of the first switching device, a process of controlling the target interface to connect to the interconnection interface of the second switching device includes:
in a case where it is determined based on the topology configuration information that the target interface exists among the plurality of interconnection interfaces of the first switching device, enabling the target interface to connect to an enabled target interface of the second switching device; and
disabling interconnection interfaces other than the target interface among the plurality of interconnection interfaces of the first switching device.

The plurality of switching devices are n switching devices, each of the n switching devices has n-1 interconnection interfaces, n is an integer greater than 1, a j-th interconnection interface of an i-th switching device among the n switching devices is selectively connected to an i-th interconnection interface of a (j+1)-th switching device among the n switching devices, i = 1, 2, ..., n-1, and j = i, ..., n-1.

In order to solve the above-mentioned technical problems, in a second aspect, an embodiment of this application further provides a high-performance switching apparatus, including:
the interconnection apparatus as described in any of the above-mentioned embodiments, wherein the interconnection apparatus includes a plurality of switching devices, each switching device of the plurality of switching devices includes an embedded controller, and the embedded controller includes a plurality of configuration registers;
a management apparatus, configured to receive a user configuration instruction, determine topology configuration information and/or interface configuration information based on the user configuration instruction, determine configuration parameter sets, which include a configuration parameter set for each switching device of the switching devices, according to the topology configuration information and/or the interface configuration information, and write each configuration parameter value of each configuration parameter set of the configuration parameter sets into a corresponding configuration register among the configuration registers of the embedded controller of a corresponding switching device among the switching devices respectively; and
a power supply apparatus, configured to supply power to the interconnection apparatus and the management apparatus.

The management apparatus includes a plurality of management controllers, each of the plurality of management controllers is connected to the interconnection apparatus; and
a current interaction controller is configured to perform data interaction with the interconnection apparatus; wherein the current interaction controller is any one of the plurality of management controllers that is in a normal operating status.

The high-performance switching apparatus further includes a complex programmable logic device,
wherein each of the plurality of management controllers is further configured to send heartbeat signals to the complex programmable logic device at preset intervals; and
the complex programmable logic device is configured to determine whether a faulty controller in an abnormal operating status exists among the plurality of management controllers, in a case where it is determined that the faulty controller in an abnormal operating status exists among the plurality of management controllers, determine whether the faulty controller is the current interaction controller, in a case where it is determined that the faulty controller is the current interaction controller, control the faulty controller to stop performing data interaction with the interconnection apparatus, and select any one of the plurality of management controllers that is in the normal operating status as a new current interaction controller, wherein the abnormal operating status is an operating status in which the heartbeat signals are not sent at the preset intervals.

The plurality of management controllers include a primary management controller and one or more secondary management controllers, and the one or more secondary management controllers are management controllers other than the primary management controller among the plurality of management controllers; and
the complex programmable logic device is further configured to, in a case where it is determined that the current interaction controller is one of the one or more secondary management controllers and that the primary management controller in the normal operating status exists, control the current interaction controller to stop performing data interaction with the interconnection apparatus and select one primary management controller in the normal operating status from the at least one primary management controller as the new current interaction controller.

The high-performance switching apparatus further includes a first switching apparatus, a plurality of first ends of the first switching apparatus are connected to the plurality of management controllers in a one-to-one correspondence, a plurality of second ends of the first switching apparatus are connected to the plurality of switching devices in a one-to-one correspondence, and a control end of the first switching apparatus is connected to the complex programmable logic device;
the complex programmable logic device is configured to determine whether a faulty controller in the abnormal operating status exists among the plurality of management controllers, in a case where it is determined that the faulty controller in the abnormal operating status exists among the plurality of management controllers, determine whether the faulty controller is the current interaction controller, in a case where it is determined that the faulty controller is the current interaction controller, generate a first control instruction corresponding to the faulty controller, select one of the plurality of management controllers that is in the normal operating status as a new current interaction controller, and generate a second control instruction corresponding to the new current interaction controller; and
the first switching apparatus is configured to, when receiving the first control instruction, determine a first target end based on the first control instruction and disconnect communication links between a management controller connected to the first target end and the plurality of switching devices, and when receiving the second control instruction, determine a second target end based on the second control instruction and connect communication links between a management controller connected to the second target end and the plurality of switching devices.

The high-performance switching apparatus further includes:
a first port expansion device, wherein a first end of the first port expansion device is connected to one of the plurality of second ends of the first switching apparatus, and a plurality of second ends of the first port expansion device are connected to the plurality of switching devices in a one-to-one correspondence.

A process of performing data interaction with the interconnection apparatus includes:
writing each configuration parameter of each configuration parameter set of the configuration parameter sets into the corresponding configuration register among the configuration registers of the embedded controller of the corresponding switching device among the switching devices respectively; and
acquiring status parameters including a status parameter of each of the plurality of switching devices and device parameters including a device parameter of each of external devices connected to each of the plurality of switching devices;
wherein the high-performance switching apparatus further includes
a prompt apparatus; and
a first baseboard controller connected to the plurality of management controllers, wherein the first baseboard controller is configured to determine a current topological status of the interconnection apparatus based on the status parameters and generate a current status prompt instruction based on the current topological status; and
wherein the complex programmable logic device is further configured to, in response to the current status prompt instruction, control the prompt apparatus to prompt current topological status information.

The high-performance switching apparatus further includes a heat dissipation apparatus, and the heat dissipation apparatus includes one or more fans.
the first baseboard controller is further configured to generate a current heat dissipation control instruction based on the current topological status and the device parameters; and
the complex programmable logic device is further configured to, in response to the current heat dissipation control instruction, adjust a rotational speed of at least one of the one or more fans.
wherein the first baseboard controller, the plurality of management controllers, the complex programmable logic device, and the interconnection apparatus are interconnected via Ethernet; and
the first baseboard controller, the plurality of management controllers, the complex programmable logic device, and the interconnection apparatus are interconnected via a Universal Serial Bus or an Inter-Integrated Circuit bus.

In order to solve the above-mentioned technical problems, in a third aspect, an embodiment of this application further provides a large model all-in-one machine, including:
a high-performance switching apparatus, as described in any of the above-mentioned embodiments;
a plurality of general-purpose computing devices connected to the interconnection apparatus of the high-performance switching apparatus; and
a plurality of heterogeneous computing devices connected to the interconnection apparatus;
wherein any two computing devices connected to the interconnection apparatus are interconnected, and each of the two computing devices is one of the plurality of general-purpose computing devices or one of the plurality of heterogeneous computing devices.

The large model all-in-one machine also includes a second baseboard controller and a plurality of second switching apparatuses;
wherein first ends of the plurality of second switching apparatuses are connected to the plurality of heterogeneous computing devices in a one-to-one correspondence, a second end of each of the plurality of second switching apparatuses is connected to the second baseboard controller, and a third end of each of the plurality of second switching apparatuses is connected to the high-performance switching apparatus.

The large model all-in-one machine also includes a plurality of network interface cards. The interconnection apparatus includes a plurality of network interface cards, the interconnection apparatus includes a plurality of switching devices, and each of the plurality of switching devices is connected to at least one of the plurality of network interface cards to cause the heterogeneous computing devices connected to the interconnection apparatus to form a network with one or more other large model all-in-one machines via one or more of the plurality of network interface cards.

The interconnection apparatus includes a plurality of switching devices, and the large model all-in-one machine also includes a plurality of switching devices, the large model all-in-one machine further includes a plurality of network interface cards, the heterogeneous computing devices are connected to the plurality of switching devices via at least one of the plurality of network interface cards to cause the heterogeneous computing devices to form a network with one or more other large model all-in-one machines via one or more of the plurality of network interface cards.

The large model all-in-one machine further includes:
at least one memory expansion card, the at least one memory expansion cards is configured to store data to be processed;
each of the plurality of general-purpose computing devices is configured to determine a size of a local memory, and in a case where the size of the local memory is less than a preset value, write the data to be processed into one or more of the at least one memory expansion card.
each of the at least one memory expansion card includes a third baseboard controller and a plurality of memory controllers, and each of the plurality of memory controllers is mounted with at least one memory module;
the third baseboard controller is configured to receive and forward a memory access instruction sent by a general-purpose computing device among the plurality of general-purpose computing devices, acquire status parameters including a status parameter of each of the plurality of memory controllers, and acquire and send target data converted into serial data format to the general-purpose computing device; and
each of the plurality of memory controllers is configured to parse memory access data in the memory access instruction, and in a case where the memory access data is data to be written, convert the data to be written from a serial data format to a parallel data format to obtain the data to be written in the parallel data format and write the data to be written in the parallel data format into one or more of the at least one memory module mounted thereto, and in a case where the memory access data is data to be read, read target data from one or more of the at least one memory module mounted thereto based on the data to be read, and convert the target data from the parallel data format into the serial data format to obtain the target data in the serial data format, and forward the target data in the serial data format to the third baseboard controller.

The large model all-in-one machine further includes a pooling management engine;
each of the plurality of general-purpose computing devices is further configured to initiate a dynamic heterogeneous resource adjustment request;
the pooling management engine is configured to, when receiving the dynamic heterogeneous resource adjustment request, determine a heterogeneous computing device to be adjusted from the plurality of heterogeneous computing devices based on the dynamic heterogeneous resource adjustment request, perform a hot removal operation on the heterogeneous computing device to be adjusted, send a location acquisition request corresponding to the heterogeneous computing device to be adjusted to the high-performance switching apparatus, send, based on received physical location information, a reset execution instruction to the heterogeneous computing device to be adjusted, and when receiving a reset completion instruction, determine the heterogeneous computing device to be adjusted as a heterogeneous computing device to be allocated, and when receiving a reallocation instruction, allocate the heterogeneous computing device to be allocated to a general-purpose computing device corresponding to the reallocation instruction among the general-purpose computing devices;
each of the plurality of heterogeneous computing devices is configured to perform a reset operation after receiving the reset execution instruction and generate the reset completion instruction after successfully executing the reset operation; and
the high-performance switching apparatus is configured to, after receiving the location acquisition request, acquire the physical location information of the heterogeneous computing device to be adjusted and return the physical location information to the pooling management engine.

This application provides an interconnection apparatus, including a plurality of switching devices. Each switching device includes a plurality of external interfaces configured to connect to the external devices, and further includes a plurality of interconnection interfaces configured for interconnection between the switching devices. The interconnection interfaces between any two switching devices are selectively connected. Each switching device also includes the embedded controller. The embedded controller controls, according to the received topology configuration information, the target interfaces on the switching device to establish communication connections with the interconnection interfaces on the corresponding switching device. On one hand, a topology structure of the interconnection apparatus can be flexibly adjusted to be applicable to different working scenarios. On the other hand, under a current topology structure, all the external devices connected to the interconnection apparatus can achieve full interconnection, thereby improving the interconnection rate and communication bandwidth between the external devices. When the interconnection apparatus is applied to the AI large model all-in-one machine, communication performance of the Al large model all-in-one machine can be improved. This application also provides the high-performance switching apparatus and the large model all-in-one machine, which have the same beneficial effects as the above-mentioned interconnection apparatus.

### Brief Description of the Drawings

To describe embodiments of this application more clearly, the following briefly introduces accompanying drawings required for the embodiments. Apparently, the accompanying drawings in the following description are merely some embodiments of this application, and those of ordinary skill in the art may also derive other accompanying drawings from these accompanying drawings without creative efforts.
Fig. 1 is a schematic structural diagram of a first interconnection apparatus according to this application;
Fig. 2 is a schematic structural diagram of a second interconnection apparatus according to this application;
Fig. 3 is a schematic diagram of a first interconnection apparatus with a 2×2 fully interconnected topology architecture according to this application;
Fig. 4 is a schematic diagram of a first interconnection apparatus with a 2×1 fully interconnected topology architecture according to this application;
Fig. 5 is a schematic structural diagram of a third interconnection apparatus according to this application;
Fig. 6 is a schematic structural diagram of a fourth interconnection apparatus according to this application;
Fig. 7 is a schematic diagram of a global identifier allocation according to this application;
Fig. 8 is a schematic diagram of embedded firmware according to this application;
Fig. 9 is a schematic diagram of a fifth interconnection apparatus with a fully interconnected topology architecture according to this application;
Fig. 10 is a schematic diagram of a sixth interconnection apparatus with a fully interconnected topology architecture according to this application;
Fig. 11 is a schematic diagram of a second interconnection apparatus with a 2×1 fully interconnected topology architecture according to this application;
Fig. 12 is a schematic diagram of a second interconnection apparatus with a 2×2 fully interconnected topology architecture according to this application;
Fig. 13 is a schematic diagram of an interconnection apparatus with a 2×3 fully interconnected topology architecture according to this application;
Fig. 14 is a schematic diagram of an interconnection apparatus with a 2×4 fully interconnected topology architecture according to this application;
Fig. 15 is a schematic structural diagram of a first high-performance switching apparatus according to this application;
Fig. 16 is a schematic structural diagram of a second high-performance switching apparatus according to this application;
Fig. 17 is a schematic structural diagram of a third high-performance switching apparatus according to this application;
Fig. 18 is a schematic structural diagram of a fourth high-performance switching apparatus according to this application;
Fig. 19 is a schematic structural diagram of a fifth high-performance switching apparatus according to this application;
Fig. 20 is a schematic structural diagram of a sixth high-performance switching apparatus according to this application;
Fig. 21 is a schematic structural diagram of a first large model all-in-one machine according to this application;
Fig. 22 is a schematic structural diagram of a second large model all-in-one machine according to this application;
Fig. 23 is a schematic structural diagram of a third large model all-in-one machine according to this application;
Fig. 24 is a schematic structural diagram of a fourth large model all-in-one machine according to this application;
Fig. 25 is a schematic structural diagram of a fifth large model all-in-one machine according to this application;
Fig. 26 is a schematic structural diagram of a sixth large model all-in-one machine according to this application;
Fig. 27 is a schematic diagram of networking of a first large model all-in-one machine according to this application;
Fig. 28 is a schematic diagram of networking of a second large model all-in-one machine according to this application;
Fig. 29 is a schematic diagram of networking of a third large model all-in-one machine according to this application;
Fig. 30 is a schematic structural diagram of a seventh large model all-in-one machine according to this application;
Fig. 31 is a schematic structural diagram of a memory expansion board according to this application;
Fig. 32 is a schematic diagram illustrating resource categories and topologies according to this application;
Fig. 33 is a schematic diagram of dynamic resource allocation according to this application;
Fig. 34 is a schematic structural diagram of an eighth large model all-in-one machine according to this application; and
Fig. 35 is a schematic structural diagram of a multi-core system according to this application.

### Detailed Description of the Embodiments

A core of this application is to provide an interconnection apparatus, a high-performance switching apparatus, and a large model all-in-one machine capable of flexibly adjusting an interconnection topology architecture to achieve full interconnection among all devices on the interconnection topology architecture and enhance interconnection rate and communication bandwidth.

In order to make objectives, technical solutions, and advantages of embodiments of this application clearer, the technical solutions in the embodiments of this application will be described clearly and completely below with reference to the accompanying drawings in the embodiments of this application. Apparently, the described embodiments are merely some but not all of the embodiments of this application. All other embodiments obtained by those of ordinary skill in the art based on the embodiments of this application without creative efforts shall fall within the protection scope of this application.

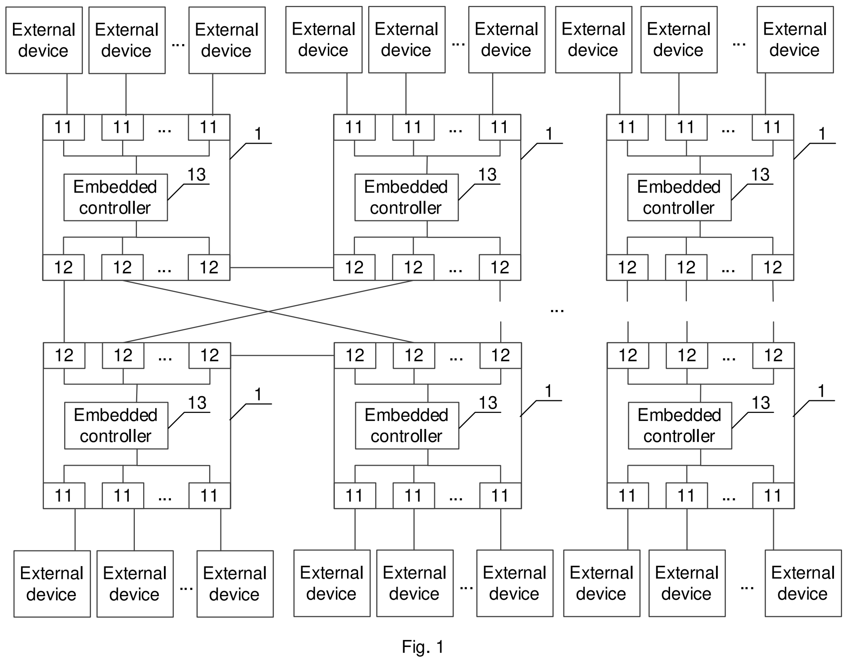

In a first aspect, referring to Fig. 1, this application provides an interconnection apparatus including a plurality of switching devices 1. Each switching device 1 includes a plurality of external interfaces 11 and a plurality of interconnection interfaces 12. The external interfaces 11 of the switching device 1 are configured to connect to external devices. The interconnection interfaces 12 of a first switching device are selectively connected to the interconnection interfaces 12 of a second switching device. The first switching device refers to any one of the plurality of switching devices 1, and the second switching device refers to any one of the plurality of switching devices 1 other than the first switching device.

The first switching device further includes an embedded controller 13, configured to receive topology configuration information, and control, in a case where it is determined based on the topology configuration information that a target interface exists among the plurality of interconnection interfaces 12 of the first switching device, the target interfaces to connect to the interconnection interfaces 12 of the second switching device in a one-to-one correspondence manner, so as to interconnect any two of the external devices connected to the switching devices 1.

In this embodiment, the interconnection apparatus includes the plurality of switching devices 1, and the number of the switching devices 1 is determined according to actual interconnection topology requirements. Each switching device 1 includes the plurality of external interfaces 11 configured to connect to the external devices such as heterogeneous computing devices, general-purpose computing devices, network interface card devices, and storage devices. The heterogeneous computing devices include, but are not limited to, a FPGA (Field Programmable Gate Array), a GPU, etc., while the general-purpose computing devices include, but are not limited to, a CPU (Central Processing Unit), etc. The network interface card devices include, but are not limited to, a NIC (Network Interface Controller) device, a smart network card CX7, etc. The storage devices include, but are not limited to, a DDR (Double Data Rate) memory, etc. The external interfaces configured to connect to the general-purpose computing devices may be set as upstream interfaces according to interface types, while the external interfaces configured to connect to heterogeneous computing devices, the network interface card devices, and the storage devices may be set as downstream interfaces according to the interface types.

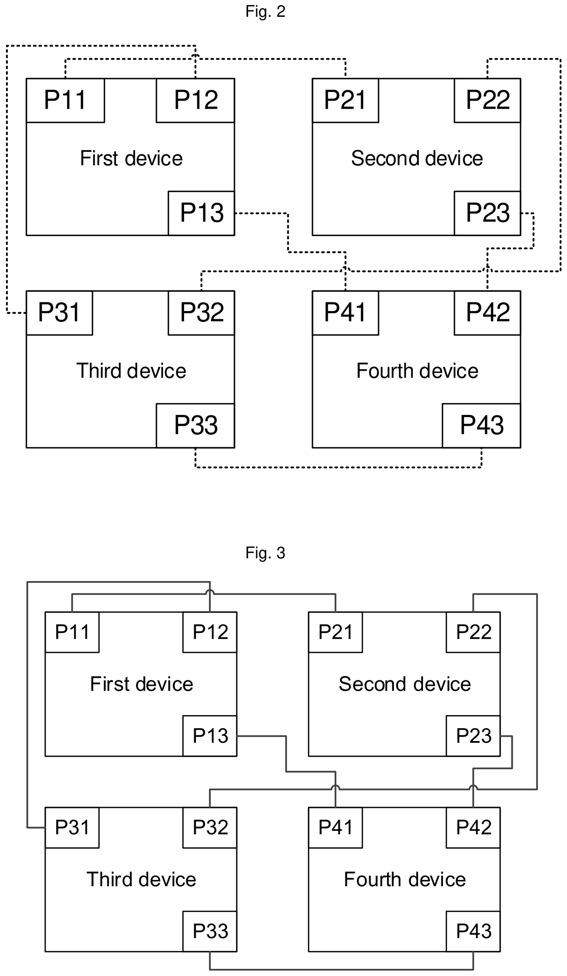

Each switching device 1 includes the plurality of interconnection interfaces 12 configured to achieve connections between any two switching devices 1. Taking one switching device 1 as an example, the number of the interconnection interfaces 12 of other switching devices 1 connected to any interconnection interface 12 on the switching device 1 is less than or equal to 1. To ensure that any two switching devices 1 can be connected, the number of the interconnection interfaces 12 on each device should be greater than or equal to n-1, where n is the number of the switching devices 1. In this embodiment, each switching device 1 may be the first switching device. When different switching devices 1 act as the first switching device, the corresponding second switching devices differ. Exemplarily, referring to Fig. 2, which illustrates an interconnection apparatus, including four switching devices 1: a first device, a second device, a third device, and a fourth device, when the first device is the first switching device, the second device, the third device, and the fourth device all serve as the second switching devices corresponding to the first device. When the second device acts as the first switching device, the first device, the third device, and the fourth device all serve as the second switching devices corresponding to the second device. When the third device is the first switching device, the first device, the second device, and the fourth device all serve as the second switching devices corresponding to the third device. When the fourth device acts as the first switching device, the first device, the second device, and the third device all serve as the second switching devices corresponding to the fourth device.

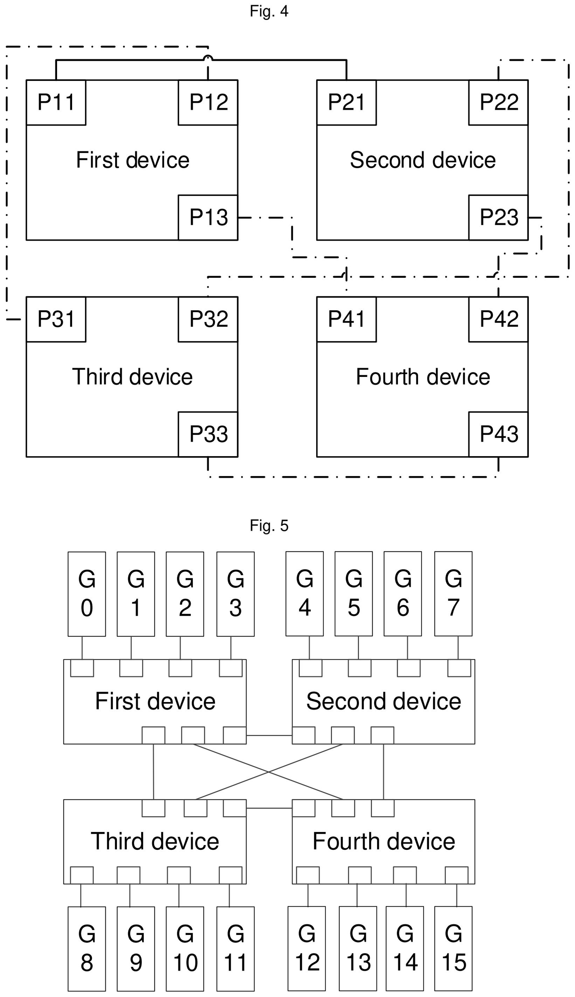

Taking the first device as the first switching device for illustration, the first device includes the plurality of interconnection interfaces 12. In Fig. 2, to achieve a fully interconnected architecture among the four switching devices 1, three interconnection interfaces 12 are set up on an i-th device, namely a first interconnection interface Pi1, a second interconnection interface Pi2, and a third interconnection interface Pi3, where i = 1, 2, 3, and 4. In Fig. 2, optional connections are represented by dashed lines. A first interconnection interface P11 on the first device is selectively connected to a first interconnection interface P21 on the second device. A second interconnection interface P12 on the first device is selectively connected to a first interconnection interface P31 on the third device, and a third interconnection interface P13 on the first device is selectively connected to a first interconnection interface P41 on the fourth device. A second interconnection interface P22 on the second device is selectively connected to a second interconnection interface P32 on the third device, a third interconnection interface P23 on the second device is selectively connected to a second interconnection interface P42 on the fourth device, and a third interconnection interface P33 on the third device is selectively connected to a third interconnection interface P43 on the fourth device. In this embodiment, the optional connection means that the interconnection interfaces 12 on two switching devices 1 may either be connected or remain unconnected, thereby achieving different interconnection topology architectures. For example, referring to Fig. 3, solid lines indicate established connections in Fig. 3, and when all the above-mentioned interconnection interfaces 12 are in an established connection relationship, the interconnection topology architecture forms a 2×2 topology structure. Referring to Fig. 4, solid lines indicate established connections in Fig. 4, while dotted dashed lines indicate that connections are not established, and the interconnection topology architecture forms a 2×1 topology architecture. Of course, when the interconnection interfaces 12 on any two switching devices 1 are selected for coordinated connections, factors such as positions, layouts, and wiring may be considered comprehensively. Coordination methods of the interconnection interfaces 12 in Fig. 2 to Fig. 4 are merely illustrative.

Since each switching device 1 in this embodiment can be the first switching device, each switching device 1 includes the embedded controller 13. Taking the embedded controller 13 in one switching device 1 as an example for illustration, the embedded controllers 13 in other switching devices 1 operate similarly. The embedded controller 13 is configured to receive the topology configuration information. The topology configuration information is written into the embedded controller 13 via an external control apparatus in a register writing manner. The embedded controller 13 responds by reading a register. The topology configuration information may be sent by a user or automatically switched according to a current application scenario. The topology configuration information can characterize information of a currently required interconnection topology architecture, and the interconnection topology architecture includes, but is not limited to, a 2×1 interconnection topology architecture, a 2×2 interconnection topology architecture, a 2×3 interconnection topology architecture, a 2×4 interconnection topology architecture, or a p×q interconnection topology architecture, where p and q are both positive integers. Under different interconnection topology architectures, the communication bandwidth between the external devices connected to each switching device 1 also varies.

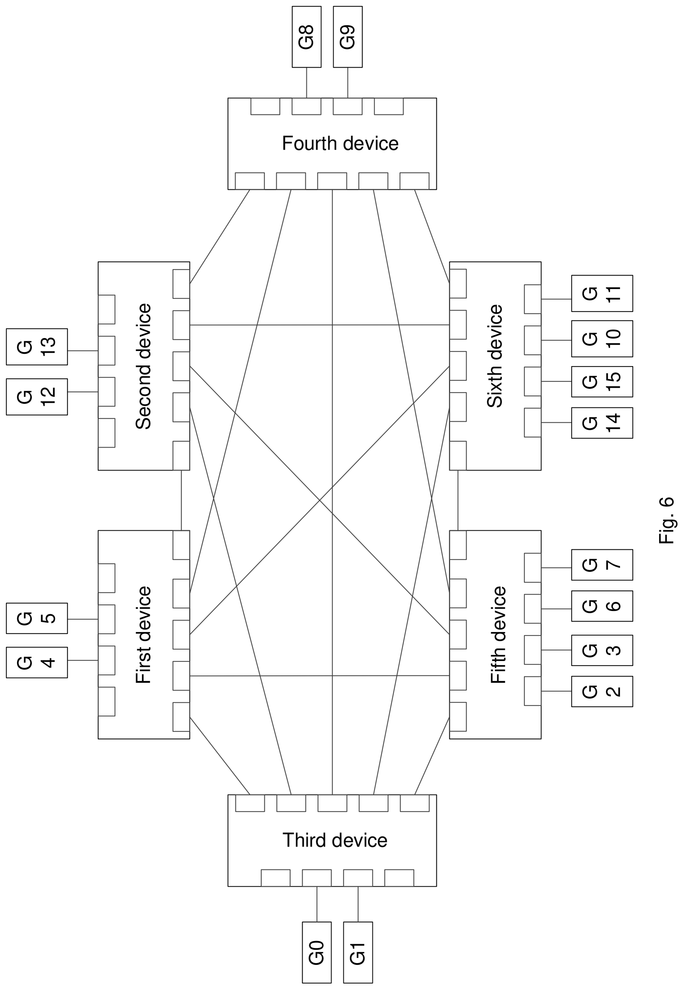

Assuming that an AI large model all-in-one machine needs to be configured with 16 GPUs, namely a first GPU G0, a second GPU G1, ..., and a sixteenth GPU G15, the 2×2 interconnection topology architecture is used as an example for illustration. Referring to Fig. 5, Fig. 5 includes four switching devices 1, namely a first device, a second device, a third device, and a fourth device, each switching device 1 is connected to four GPUs, thereby achieving full interconnection of the 16 GPUs. In this interconnection topology architecture, each switching device 1 may achieve simultaneous Peer-to-Peer (P2P) communication via three interconnection links. It should be understood that a 2×2 fully interconnected topology architecture can support 16 peripheral component interconnect express (PCIE) 5.0 GPUs, with every four GPUs can be grouped together, resulting in a total of four groups which are interconnected through an internal fabric (a Full-interconnect line) bus, with a bidirectional interconnection bus bandwidth of 192GB/s (PCIE GEN4) or 384GB/s (PCIE GEN5). Taking the 2×3 interconnection topology architecture as an example for illustration, referring to Fig. 6, Fig. 6 includes six switching devices 1, namely a first device, a second device, a third device, a fourth device, a fifth device, and a sixth device, where the first device, the second device, the third device, and the fourth device are each connected to two GPUs, and the fifth device and the sixth device are each connected to four GPUs, thereby achieving full interconnection of the 16 GPUs. In this interconnection topology architecture, each switching device 1 may achieve simultaneous P2P communication via five interconnection links. It should be understood that under the 2×3 fully interconnected topology architecture, 16 PCIE5.0 GPUs can be supported, with each GPU providing five channels to connect to other GPUs, and the GPUs are connected through an internal fabric bus, providing a bidirectional interconnected bus bandwidth of 320GB/s (PCIE GEN4 (PCIE Generation4)) and 640GB/s (PCIE GEN5). Different interconnection topology architectures offer varying communication bandwidth, which can be selected according to actual engineering requirements.

It should be understood that under different interconnection topology architectures, the number of the interconnection interfaces 12 on each first switching device that need to connect to the corresponding second switching devices also varies, and may be 0, 1, or more. The embedded controller 13 may determine, according to the received topology configuration information, whether a target interface exists among the plurality of interconnection interfaces 12 on the first switching device that needs to connect to the interconnection interface 12 on the second switching device. The number of the target interfaces is 0, 1, or more. When the number of the target interfaces is 0, it means that the current interconnection topology architecture does not include the first switching device where the embedded controller 13 is located. When the number of the target interfaces is 1 or more, it means that the current interconnection topology architecture includes the first switching device where the embedded controller 13 is located. For each target interface on the first switching device, the target interface is controlled to connect to the corresponding interconnection interface 12 on the second switching device. In this embodiment, for each interconnection interface 12 on the first switching device, a one-to-one correspondence and matching relationship between each interconnection interface 12 and the interconnection interface 12 on each second switching device may be predetermined. As shown in Fig.2, the first interconnection interface P11 of the first device and the first interconnection interface P21 of the second device may be preset to match each other, and may be selectively connected. The second interconnection interface P12 of the first device and the first interconnection interface P31 of the third device may be preset to match each other, and may be selectively connected. The third interconnection interface P13 of the first device and the first interconnection interface P41 of the fourth device may be preset to match each other, and may be selectively connected. Of course, the first interconnection interface P11 of the first device may also be connected to the second interconnection interface P22 of the second device, and the one-to-one correspondence and matching relationships of other interfaces are modified accordingly to ensure that any two switching devices 1 can be connected through the corresponding interconnection interfaces 12.

Exemplarily, referring to Fig. 3 and Fig. 4, taking the first device and the third device as examples of the first switching device for illustration, and the same applies to the second device and the fourth device. The first device is the first switching device, and the second device, the third device, and the fourth device are the second switching devices corresponding to the first device. In a case where the interconnection topology architecture corresponding to the topology configuration information received by the embedded controller 13 of the first device is the 2×2 interconnection topology architecture as shown in Fig. 3, the embedded controller 13 in the first device determines the first interconnection interface P11, the second interconnection interface P12, and the third interconnection interface P13 on the first device as the target interfaces. The embedded controller 13 in the first device controls the first interconnection interface P11 on the first device to connect to the first interconnection interface P21 on the second device, controls the second interconnection interface P12 on the first device to connect to the first interconnection interface P31 on the third device, and controls the third interconnection interface P13 on the first device to connect to the first interconnection interface P41 on the fourth device. In a case where the interconnection topology architecture corresponding to the topology configuration information received by the embedded controller 13 of the first device is the 2×1 interconnection topology architecture as shown in Fig. 4, the embedded controller 13 in the first device determines the first interconnection interface P11 on the first device as the target interface. The embedded controller 13 in the first device controls the first interconnection interface P11 on the first device to connect to the first interconnection interface P21 on the second device, and controls the second interconnection interface P12 on the first device not to connect to the first interconnection interface P31 on the third device, as well as controls the third interconnection interface P13 on the first device not to connect to the first interconnection interface P41 on the fourth device. The third device is the first switching device, and the first device, the second device, and the fourth device are the second switching devices corresponding to the third device. In a case where the interconnection topology architecture corresponding to the topology configuration information received by the embedded controller 13 of the third device is the 2×2 topology architecture as shown in Fig. 3, the embedded controller 13 in the third device determines the first interconnection interface P31, the second interconnection interface P32, and the third interconnection interface P33 on the third device as the target interfaces. The embedded controller 13 in the third device controls the first interconnection interface P31 on the third device to connect to the second interconnection interface P12 on the first device, controls the second interconnection interface P32 on the third device to connect to the second interconnection interface P22 on the second device, and controls the third interconnection interface P33 on the third device to connect to the third interconnection interface P43 on the fourth device. In a case where the interconnection topology architecture corresponding to the topology configuration information received by the embedded controller 13 of the third device is the 2×1 topology architecture as shown in Fig. 4, the embedded controller 13 in the third device determines that none of the first interconnection interface P31, the second interconnection interface P32, and the third interconnection interface P33 on the third device are the target interfaces, meaning that the third device is not included in the current interconnection topology architecture. In this case, the embedded controller 13 on the third device controls the first interconnection interface P31 on the third device not to connect to the second interconnection interface P12 on the first device, controls the second interconnection interface P32 on the third device not to connect to the second interconnection interface P22 on the second device, and controls the third interconnection interface P33 on the third device not to connect to the third interconnection interface P43 on the fourth device.

As an exemplary embodiment, in a case where it is determined based on the topology configuration information that a target interface exists among the plurality of interconnection interfaces 12 of the first switching device, a process of controlling the target interface to connect to the interconnection interfaces 12 of the second switching device in a one-to-one correspondence includes:
in a case where it is determined based on the topology configuration information that the target interface exists among the plurality of interconnection interfaces 12 of the first switching device, enabling the target interface to connect to an enabled target interface of the second switching device in a one-to-one correspondence; and
disabling interconnection interfaces 12 other than the target interface among the plurality of interconnection interfaces 12 of the first switching device.

In this embodiment, to enhance control efficiency, the interconnection interfaces 12 that are matched in pair in each switching device 1 may be connected through cables, as shown in Fig. 2. The first interconnection interface P11 of the first device is connected with the first interconnection interface P21 of the second device through a cable. The embedded controller 13 on the first device controls whether the first interconnection interface P11 of the first device connects to the first interconnection interface P21 on the second device by controlling the enabling or disabling of the first interconnection interface P11 on the first device. The embedded controller 13 on the second device controls whether the first interconnection interface P21 of the second device connects to the first interconnection interface P11 on the first device by controlling the enabling or disabling of the first interconnection interface P21 on the second device. When the two matched interconnection interfaces 12 are enabled, a connection is established between them. When one of the two matched interconnection interfaces 12 is disabled, no connection is established between them.

As an optional embodiment, a corresponding relationship between each interconnection topology architecture, the switching device 1 that forms the interconnection topology architecture, and the target interface on the switching device 1 may be predetermined. The corresponding relationship is pre-stored in the embedded controller 13 of each switching device 1. After receiving the topology configuration information, the embedded controller 13 determines, based on the interconnection topology architecture determined according to the topology configuration information and the pre-stored corresponding relationship, whether the first switching device is the switching device 1 that forms the interconnection topology architecture. In a case where it is determined that the first switching device determined based on the interconnection topology architecture determined according to the topology configuration information and the pre-stored corresponding relationship is not the switching device 1 that forms the interconnection topology architecture, all interconnection interfaces 12 on the first switching device are controlled to be disabled. In a case where it is determined that the first switching device determined based on the interconnection topology architecture determined according to the topology configuration information and the pre-stored corresponding relationship is the switching device 1 that forms the interconnection topology architecture, the corresponding target interface is determined and enabled.

Referring to Fig. 3, in a case where the embedded controller 13 of the first device determines, based on the received topology configuration information, that the current interconnection topology architecture is the 2×2 topology architecture, the first device is determined as a switching device 1 that forms the interconnection topology architecture. Based on the pre-stored corresponding relationship, all the interconnection interfaces 12 on the first device are determined as the target interfaces and enabled. In a case where the embedded controller 13 of the first device determines, based on the received topology configuration information, that the current interconnection topology architecture is the 2×1 topology architecture, the first device is determined as a switching device 1 that forms the interconnection topology architecture. Based on the pre-stored corresponding relationship, the first interconnection interface P11 on the first device is determined as the target interface and enabled, while the second interconnection interface P12 and the third interconnection interface P13 on the first device are controlled to be disabled.

Referring to Fig. 4, in a case where the embedded controller 13 of the third device determines, based on the received topology configuration information, that the current interconnection topology architecture is the 2×2 topology architecture, the third device is determined as a switching device 1 that forms the interconnection topology architecture. Based on the pre-stored corresponding relationship, all the interconnection interfaces 12 on the third device are determined as the target interfaces and enabled. In a case where the embedded controller 13 of the third device determines, based on the received topology configuration information, that the current interconnection topology architecture is the 2×1 topology architecture, it is determined that the third device is not the switching device 1 that forms the interconnection topology architecture, and all the interconnection interfaces 12 on the third device are controlled to be disabled.

In an optional embodiment, a plurality of switching boards may be designed, and each switching board is provided with at least two switching devices 1.

In an optional embodiment, the switching devices 1 are interconnected with each other through PCIE x16 links. Taking 16 GPUs as an example, a GPU interconnection bandwidth may reach 384 Gigabytes per second (GB/s), providing an improved full-interconnection topology aggregation bandwidth.

It can be seen that in this embodiment, the interconnection apparatus includes the plurality of switching devices 1. Each switching device 1 includes the plurality of external interfaces 11 configured to connect to the external devices, and further includes the plurality of interconnection interfaces 12 configured for interconnection between the switching devices 1. The interconnection interfaces 12 between any two switching devices 1 are selectively connected. Each switching device 1 also includes the embedded controller 13. The embedded controller 13 controls, according to the received topology configuration information, the target interfaces on the switching device 1 to establish communication connections with the interconnection interfaces 12 on the corresponding switching device 1. On one hand, the topology structure of the interconnection apparatus can be flexibly adjusted to be applicable to different working scenarios. On the other hand, under the current topology structure, all the external devices connected to the interconnection apparatus can achieve full interconnection, thereby improving an interconnection rate and communication bandwidth between the external devices. When the interconnection apparatus is applied to the AI large model all-in-one machine, communication performance of the Al large model all-in-one machine can be improved.

Based on the above-mentioned embodiments:
as an exemplary embodiment, the embedded controller 13 is further configured to enumerate the external devices connected to the first switching device and the external devices connected to the second switching device connected via the target interfaces, determine global identifiers comprising a global identifier of each external device, and establish an internal routing table based on the global identifiers to transmit received data using the internal routing table. The global identifier of the external device includes a device identifier of the external device and a device identifier of the switching device 1 to which the external device is connected.

In this embodiment, the external devices connected to the external interfaces 11 on the switching device 1 may achieve interconnection with other external devices through the switching device 1 and the interconnection interfaces 12 on the switching device 1, as shown in Fig. 5, a first GPU G0 connected to the first device may be interconnected with a second GPU G1, a third GPU G2, and a fourth GPU G3 connected to the first device, or may also be interconnected with a ninth GPU G8 on the third device and a fifth GPU G4 on the second device through the interconnection interfaces 12 on the first device. Therefore, the embedded controller 13 on the switching device 1 in this application is configured to enumerate the external devices connected to the switching device 1 and the external devices connected to the second switching device connected via the target interfaces. In other words, the embedded controller 13 on the first device may enumerate the external devices G0 to G3 connected to its own external interfaces 11, and can also enumerate G4 to G7 connected to the external interfaces 11 of the second device, the external devices G8 to G11 connected to the external interfaces 11 of the third device, and the external devices G12 to G15 connected to the external interfaces 11 of the fourth device. It should be understood that each switching device 1 has its own device identifier, and the external device connected to each device has its own device identifier. Since the embedded controller 13 on each switching device 1 in this application can enumerate all the external devices, for a system with a plurality of switching devices 1 achieving large-scale interconnection, to facilitate differentiation, in this embodiment, a segmented unique identifier is composed of the device identifier and an internal ID (Identification) of the device, thereby achieving the uniqueness of the identifiers of all external devices in the entire system. After determining the global identifier of each external device, the corresponding internal routing table may be established based on the global identifiers of all the enumerated external devices to achieve mapping between internal interfaces. and data transmission within the switching device 1 is performed using the internal routing table to improve data transmission efficiency, thereby improving communication efficiency.

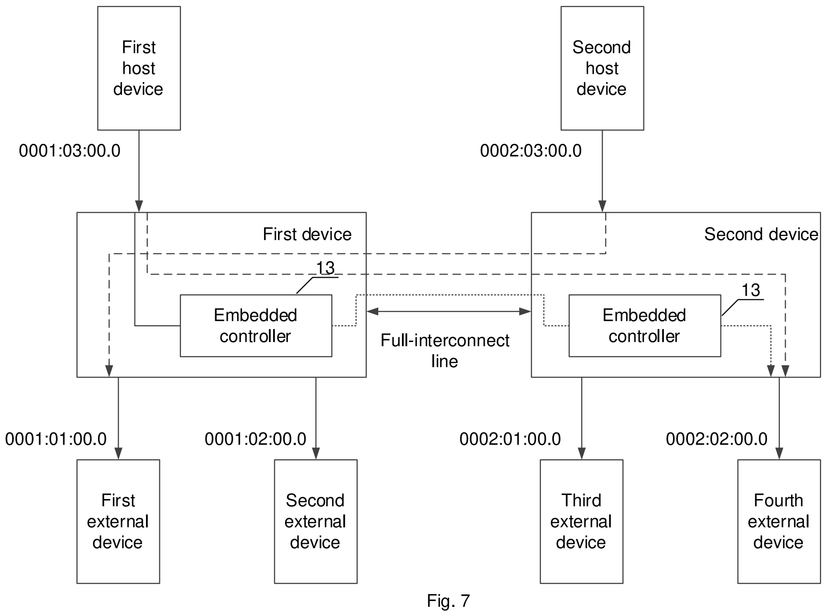

Exemplarily, as shown in Fig. 7, which illustrates two switching devices 1, namely the first device and the second device, the two switching devices 1 both include the embedded controllers 13. The external interfaces of the first device are connected to a first host device, a first external device, and a second external device respectively, while the external interfaces of the second device are connected to a second host device, a third external device, and a fourth external device respectively. It should be understood that the first host device and the second host device are also types of external devices. The embedded controller 13 in the first device and the embedded controller 13 in the second device are connected through a Fabric (a Full-interconnect line). The global identifier assigned to the first host device is 0001:03:00.0, the global identifier assigned to the first external device is 0001:01:00.0, and the global identifier assigned to the second external device is 0001:02:00.0, where the first segment 0001 of the global identifier represents the device identifier of the first device, the second segment of the global identifier represents the device identifier of each device, 01 represents the device identifier of the first external device, 02 represents the device identifier of the second external device, and 03 represents the device identifier of the first host device. The global identifier assigned to the second host device is 0002:03:00.0, the global identifier assigned to the third external device is 0002:01:00.0, and the global identifier assigned to the fourth external device is 0002:02:00.0, where the first segment 0002 of the global identifier represents the device identifier of the second device, the second segment in the global identifier represents the device identifier of each device, 01 represents the device identifier of the third external device, 02 represents the device identifier of the fourth external device, and 03 represents the device identifier of the second host device. As shown in Fig. 7, there are two communication links between the host devices, the switching devices 1, and the external devices: one is a configuration transaction layer packet (TLP) routed based on ID (global identifier), as indicated by a dotted line in Fig. 7, and the other is a data TLP routed based on an address (global address), as indicated by a short dashed line in Fig. 7.

As an exemplary embodiment, the embedded controller 13 is further configured to receive interface configuration information and adjust one or more interface parameters of one or more external interfaces 11 on the first switching device based on the interface configuration information, to make the adjusted one or more interface parameters of the one or more external interfaces 11 match communication parameters of the one or more external devices connected to the one or more external interfaces 11.

In this embodiment, for a heterogeneous resource pool system, each switching device 1 and the external device are interconnected using unified interfaces. For each external interface on the switching device 1, the external device connected to the external interface is determined, and the interface parameters of the external interface are configured based on the communication parameters of the external device. Optionally, the corresponding interface configuration information is generated according to the communication parameters of each external device, and the embedded controller 13 adjusts the interface parameters of the external interfaces 11 on the switching device 1 according to the received interface configuration information. The interface parameters include, but are not limited to, basic attributes such as an interface type, a bandwidth, a speed, and a clock, as well as interface bifurcation settings, interface clock settings, and interface resource reservation settings, thereby significantly improving the usage efficiency of the switching device 1 and allowing the heterogeneous resource pool system to be applicable to different application scenarios.

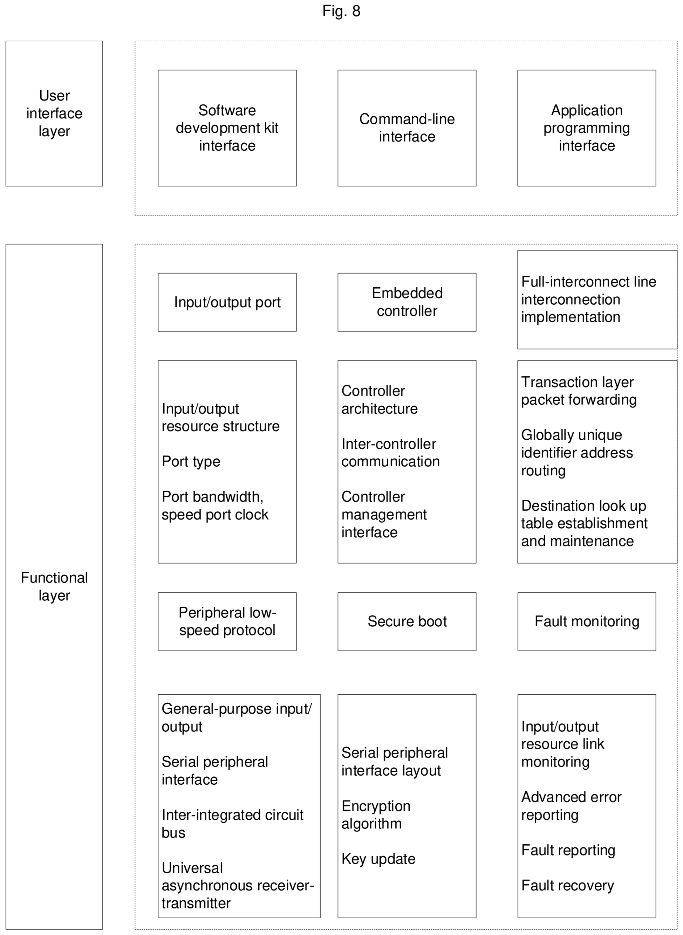

In an exemplary embodiment, an overall technical solution for embedded firmware is described. Referring to Fig. 8, through the embedded controller 13, a complex resource logical structure based on a virtual bridge can be achieved, supporting the configuration of basic attributes such as a port type, a bandwidth, a speed, and a clock, as well as supporting complex topological interconnection, thereby achieving resource pooling for large-scale networking. The transmission of the configuration TLP (the configuration TLP is a dedicated data packet used to configure PCIE devices, such as modifying device register values) routed based on a global address ID can be achieved, and destination lookup tables (DLUTs) are established to achieve TLP routing for complex topologies. Each switching device 1 also provides rich peripheral low-speed protocols, such as a universal asynchronous receiver/transmitter (UART) and general-purpose input/output (GPIO), supports secure boot to ensure device security, and supports fault monitoring mechanisms such as advanced error reporting (AER) and real-time monitoring of a health status of I/O resources. The embedded controller 13 in the switching device 1 implements the logical structure design of the I/O resources based on the virtual bridge, independently enumerates internal virtual bridges within the switching device 1 through management ports, and is configured to uniformly manage device resources connected to the switching device 1.

In an exemplary embodiment, the number of the switching devices 1 is n, and each switching device 1 has n-1 interconnection interfaces 12, where n is an integer greater than 1. A j-th interconnection interface 12 of an i-th switching device 1 is selectively connected to an i-th interconnection interface 12 of a (j+1)-th switching device 1, where i = 1, 2, ..., n-1, and j = i, ..., n-1.

In this embodiment, to achieve full interconnection among all the switching devices 1, the number of the interconnection interfaces 12 on each switching device 1 is limited. When the number of the switching devices 1 is n, the number of the interconnection interfaces 12 on each switching device 1 is n-1.

For example, when there are four switching devices 1, each switching device 1 has three interconnection interfaces 12. The four switching devices 1 are the first device, the second device, the third device, and the fourth device, respectively. The first interconnection interface on the first device is P11, the second interconnection interface on the first device is P12, and the third interconnection interface on the first device is P13. The first interconnection interface on the second device is P21, the second interconnection interface on the second device is P22, and the third interconnection interface on the second device is P23. The first interconnection interface on the third device is P31, the second interconnection interface on the third device is P32, and the third interconnection interface on the third device is P33. The first interconnection interface on the fourth device is P41, the second interconnection interface on the fourth device is P42, and the third interconnection interface on the fourth device is P43. For corresponding connection relationships, refer to Fig. 2. The four switching devices 1 may support switching between the 2×1 fully interconnected topology and the 2×2 fully interconnected topology, with switching manners illustrated in Fig. 3 and Fig. 4.

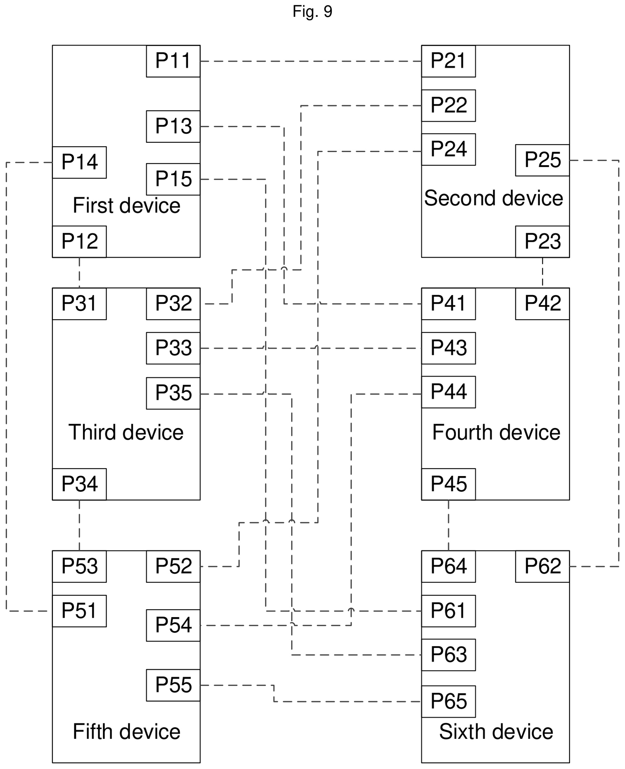

For example, referring to Fig. 9, when there are six switching devices 1, each switching device 1 includes five interconnection interfaces 12. The six switching devices 1 are the first device, the second device, the third device, the fourth device, the fifth device, and the sixth device, respectively. The first interconnection interface on the first device is P11, the second interconnection interface on the first device is P12, the third interconnection interface on the first device is P13, the fourth interconnection interface on the first device is P14, and the fifth interconnection interface on the first device is P15. The first interconnection interface on the second device is P21, the second interconnection interface on the second device is P22, the third interconnection interface on the second device is P23, the fourth interconnection interface on the second device is P24, and the fifth interconnection interface on the second device is P25. The first interconnection interface on the third device is P31, the second interconnection interface on the third device is P32, the third interconnection interface on the third device is P33, the fourth interconnection interface on the third device is P34, and the fifth interconnection interface on the fourth device is P35. The first interconnection interface on the fourth device is P41, the second interconnection interface on the fourth device is P42, the third interconnection interface on the fourth device is P43, the fourth interconnection interface on the fourth device is P44, and the fifth interconnection interface on the fourth device is P45. The first interconnection interface on the fifth device is P51, the second interconnection interface on the fifth device is P52, the third interconnection interface on the fifth device is P53, the fourth interconnection interface on the fifth device is P54, and the fifth interconnection interface on the fifth device is P55. The first interconnection interface on the sixth device is P61, the second interconnection interface on the sixth device is P62, the third interconnection interface on the sixth device is P63, the fourth interconnection interface on the sixth device is P64, and the fifth interconnection interface on the sixth device is P65. For corresponding connection relationships, refer to Fig. 9. The six switching devices 1 may support switching among the 2×1 fully interconnected topology, the 2×2 fully interconnected topology, and the 2×3 fully interconnected topology, with optional connections indicated by dashed lines in Fig. 9.

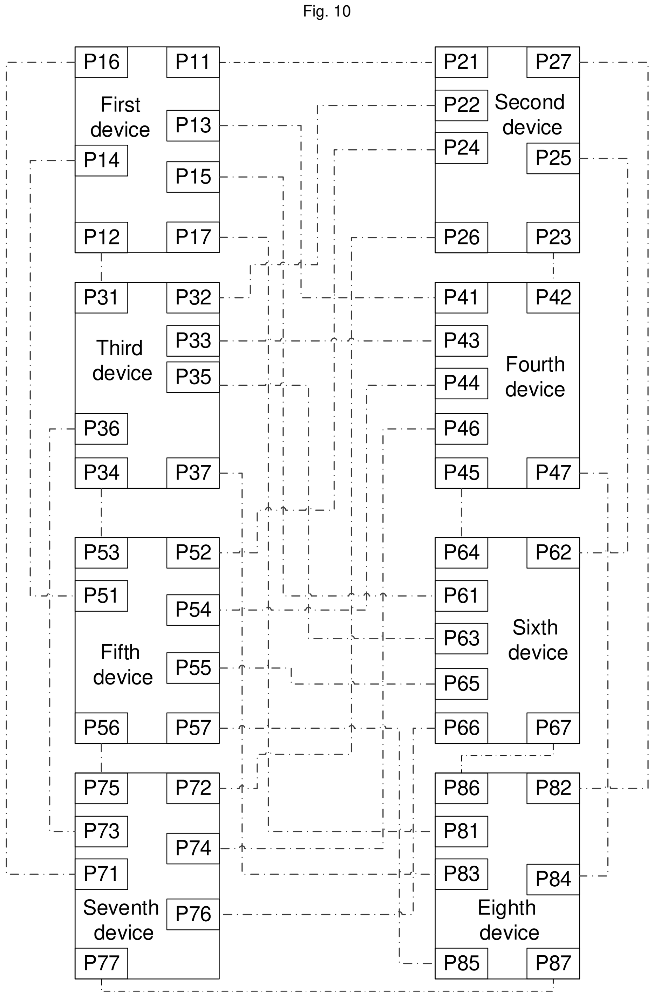

For example, referring to Fig. 10, when there are eight switching devices 1, each switching device 1 includes seven interconnection interfaces 12. The eight switching devices 1 are the first device, the second device, the third device, the fourth device, the fifth device, the sixth device, a seventh device, and an eighth device, respectively. The first interconnection interface on the first device is P11, the second interconnection interface on the first device is P12, the third interconnection interface on the first device is P13, the fourth interconnection interface on the first device is P14, the fifth interconnection interface on the first device is P15, the sixth interconnection interface on the first device is P16, and the seventh interconnection interface on the first device is P17. The first interconnection interface on the second device is P21, the second interconnection interface on the second device is P22, the third interconnection interface on the second device is P23, the fourth interconnection interface on the second device is P24, the fifth interconnection interface on the second device is P25, the sixth interconnection interface on the second device is P26, and the seventh interconnection interface on the second device is P27. The first interconnection interface on the third device is P31, the second interconnection interface on the third device is P32, the third interconnection interface on the third device is P33, the fourth interconnection interface on the third device is P34, the fifth interconnection interface on the third device is P35, the sixth interconnection interface on the third device is P36, and the seventh interconnection interface on the third device is P37. The first interconnection interface on the fourth device is P41, the second interconnection interface on the fourth device is P42, the third interconnection interface on the fourth device is P43, the fourth interconnection interface on the fourth device is P44, the fifth interconnection interface on the fourth device is P45, the sixth interconnection interface on the fourth device is P46, and the seventh interconnection interface on the fourth device is P47. The first interconnection interface on the fifth device is P51, the second interconnection interface on the fifth device is P52, the third interconnection interface on the fifth device is P53, the fourth interconnection interface on the fifth device is P54, the fifth interconnection interface on the fifth device is P55, the sixth interconnection interface on the fifth device is P56, and the seventh interconnection interface on the fifth device is P57. The first interconnection interface on the sixth device is P61, the second interconnection interface on the sixth device is P62, the third interconnection interface on the sixth device is P63, the fourth interconnection interface on the sixth device is P64, the fifth interconnection interface on the sixth device is P65, the sixth interconnection interface on the sixth device is P66, and the seventh interconnection interface on the sixth device is P67. The first interconnection interface on the seventh device is P71, the second interconnection interface on the seventh device is P72, the third interconnection interface on the seventh device is P73, the fourth interconnection interface on the seventh device is P74, the fifth interconnection interface on the seventh device is P75, the sixth interconnection interface on the seventh device is P76, and the seventh interconnection interface on the seventh device is P77. The first interconnection interface on the eighth device is P81, the second interconnection interface on the eighth device is P82, the third interconnection interface on the eighth device is P83, the fourth interconnection interface on the eighth device is P84, the fifth interconnection interface on the eighth device is P85, the sixth interconnection interface on the eighth device is P86, and the seventh interconnection interface on the eighth device is P87. For corresponding connection relationships, refer to Fig. 10. The eight switching devices 1 may support switching among the 2×1 fully interconnected topology, the 2×2 fully interconnected topology, the 2×3 fully interconnected topology, and the 2×4 fully interconnected topology.

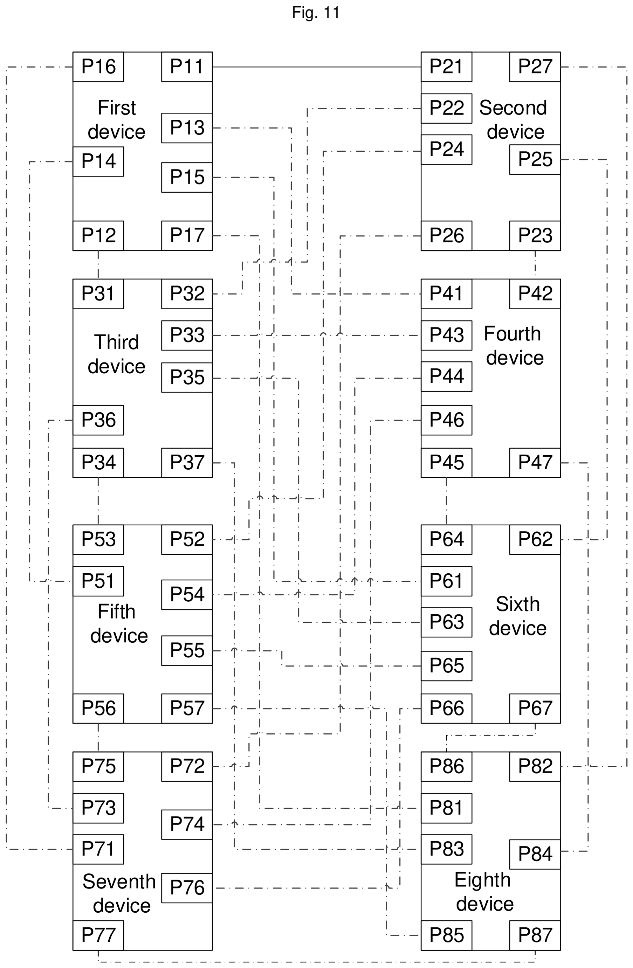

Referring to Fig. 11, Fig. 12, Fig. 13, and Fig. 14, a process of switching among the 2×1 fully interconnected topology, the 2×2 fully interconnected topology, the 2×3 fully interconnected topology, and the 2×4 fully interconnected topology for the eight switching devices 1 is described:
Fig. 11 is a schematic diagram of a second interconnection apparatus with a 2×1 fully interconnected topology architecture according to this application, where the first interconnection interface P11 of the first device connects to the first interconnection interface P21 of the second device.

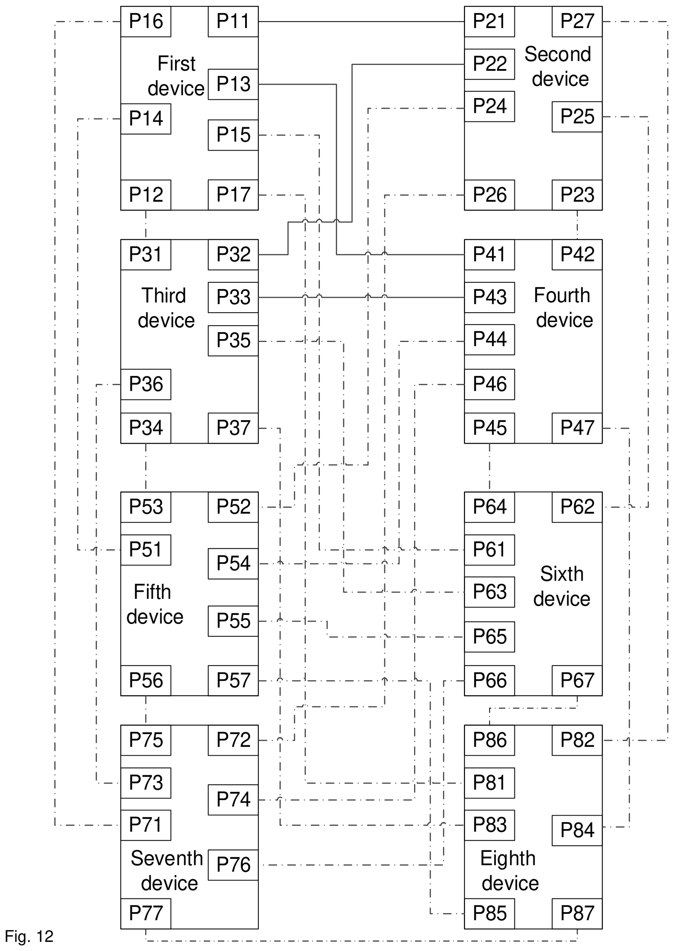

Fig. 12 is a schematic diagram of a second interconnection apparatus with a 2×2 fully interconnected topology architecture according to this application. The first interconnection interface P11 of the first device connects to the first interconnection interface P21 of the second device, the second interconnection interface P12 of the first device connects to the first interconnection interface P31 of the third device, the third interconnection interface P13 of the first device connects to the first interconnection interface P41 of the fourth device, the second interconnection interface P22 of the second device connects to the second interconnection interface P32 of the third device, the third interconnection interface P23 of the second device connects to the second interconnection interface P42 of the fourth device, and the third interconnection interface of the third device connects to the third interconnection interface of the fourth device.

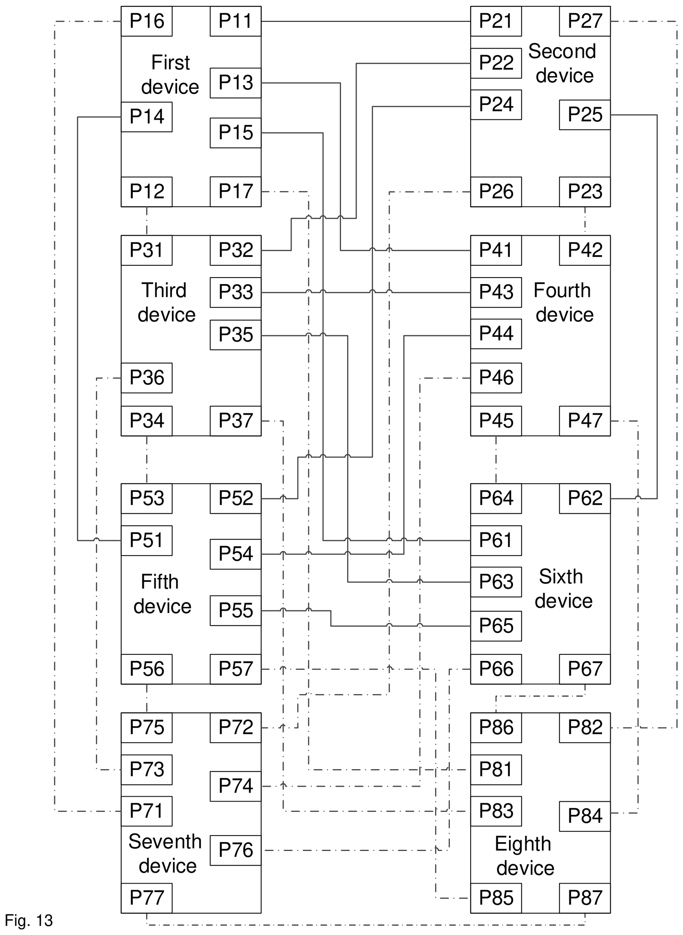

Fig. 13 is a schematic diagram of an interconnection apparatus with a 2×3 fully interconnected topology architecture according to this application. The first interconnection interface P11 of the first device connects to the first interconnection interface P21 of the second device, the second interconnection interface P12 of the first device connects to the first interconnection interface P31 of the third device, and the third interconnection interface P13 of the first device connects to the first interconnection interface P41 of the fourth device. The second interconnection interface P22 of the second device connects to the second interconnection interface P32 of the third device, the third interconnection interface P23 of the second device connects to the second interconnection interface P42 of the fourth device, the third interconnection interface P33 of the third device connects to the third interconnection interface P43 of the fourth device, the fourth interconnection interface P14 of the first device connects to the first interconnection interface P51 of the fifth device, the fifth interconnection interface P15 of the first device connects to the first interconnection interface P61 of the sixth device, the fourth interconnection interface P24 of the second device connects to the second interconnection interface P52 of the fifth device, and the fifth interconnection interface P25 of the second device connects to the second interconnection interface P62 of the sixth device. The fourth interconnection interface P34 of the third device connects to the third interconnection interface P53 of the fifth device, the fifth interconnection interface P35 of the third device connects to the third interconnection interface P63 of the sixth device, the fifth interconnection interface of the fourth device connects to the fourth interconnection interface P54 of the fifth device, the sixth interconnection interface P46 of the fourth device connects to the fourth interconnection interface P64 of the sixth device, and the fifth interconnection interface P55 of the fifth device connects to the fifth interconnection interface P65 of the sixth device.

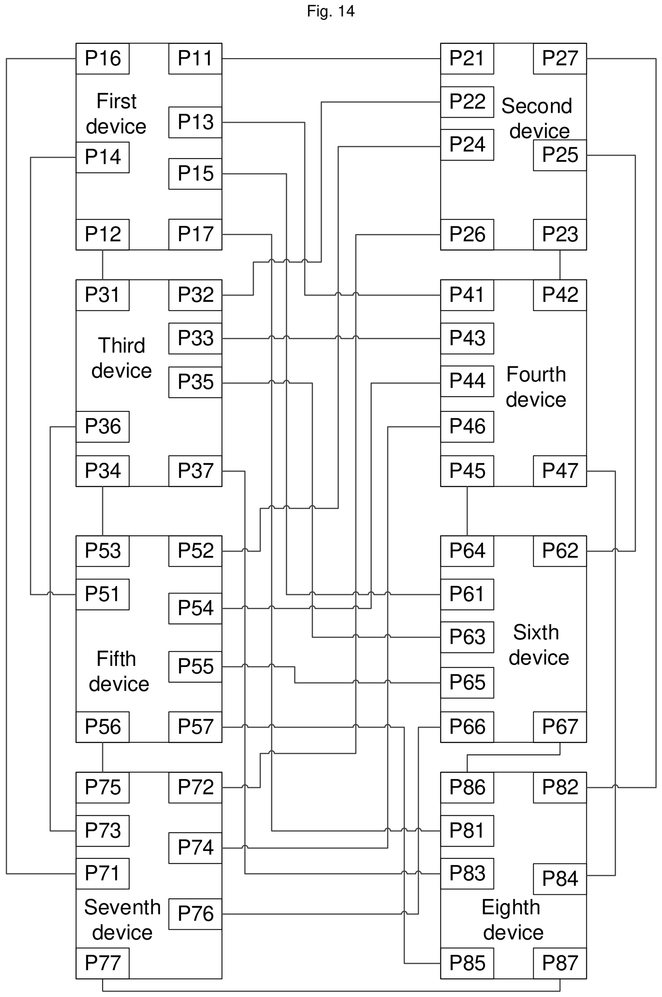

Fig. 14 is a schematic diagram of an interconnection apparatus with a 2×4 fully interconnected topology architecture according to this application.A j-th interconnection interface Pij of the i-th device connects to the i-th interconnection interface P(j+1)i of the (j+1)-th switching device 1.

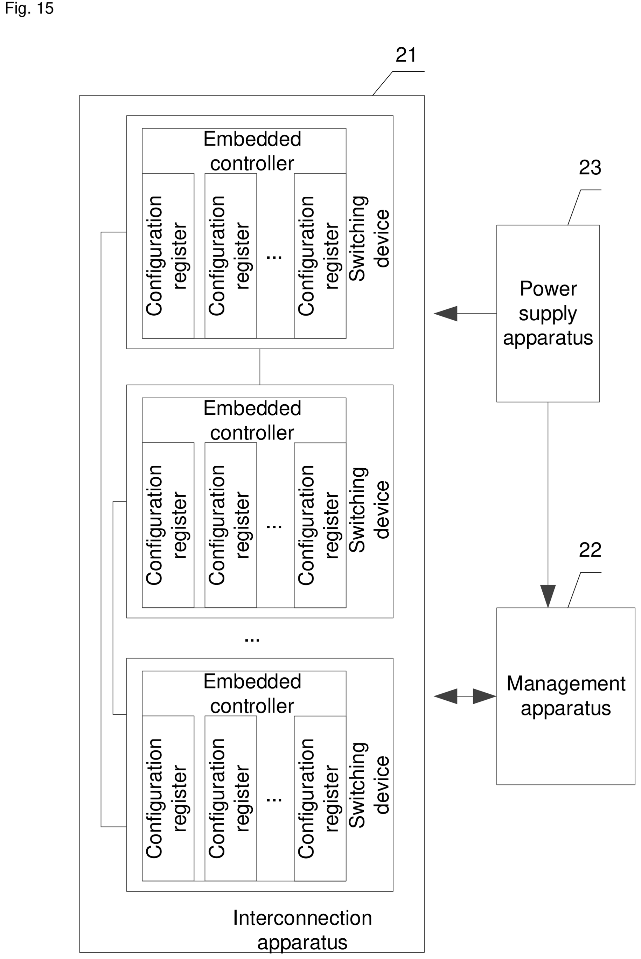

In a second aspect, referring to Fig. 15, this application further provides a high-performance switching apparatus, including:
an interconnection apparatus 21 as described in any of the above-mentioned embodiments, where the interconnection apparatus 21 includes a plurality of switching devices, each switching device includes an embedded controller, and the embedded controller includes a plurality of configuration registers;
a management apparatus 22, configured to receive a user configuration instruction, determine topology configuration information and/or interface configuration information based on the user configuration instruction, determine a configuration parameter set for each switching device according to the topology configuration information and/or the interface configuration information, and write each configuration parameter value of each configuration parameter set into a corresponding configuration register of the embedded controller of a corresponding switching device; and
a power supply apparatus 23, configured to supply power to the interconnection apparatus 21 and the management apparatus 22.

In this embodiment, the high-performance switching apparatus includes the management apparatus 22, the power supply apparatus 23, and the interconnection apparatus 21 as described in the above-mentioned embodiments, where the interconnection apparatus 21 includes the plurality of switching devices forming different interconnection topology architectures. As an optional embodiment, the plurality of switching devices in the above-mentioned interconnection apparatus 21 may be arranged on a single data switching board. The management apparatus 22 exchanges data with each switching device in the interconnection apparatus 21. The power supply apparatus 23 includes a power supply unit (PSU) and a plurality of Voltage Regulator (VR) modules, with the PSU supplying power to the management apparatus 22, the interconnection apparatus 21, or other apparatuses in the high-performance switching apparatus through the corresponding VRs.

The management apparatus 22 is interconnected with the data switching board via connectors through a network, a universal serial bus (USB), a UART, an inter-integrated circuit (IIC) bus, and other links, thereby achieving data communication and control functions across the links. Optionally, the management apparatus 22 is configured to receive the user configuration instruction sent by a user. The user configuration instruction includes a topology configuration instruction and/or an interface configuration instruction. After receiving the topology configuration instruction, the management apparatus 22 determines the topology configuration information, and may determine, based on the topology configuration information, topology configuration parameters corresponding to each switching device. After receiving the interface configuration instructions, the management apparatus 22 determines the interface configuration information, and may determine, based on the interface configuration information, interface configuration parameters corresponding to each switching device. When the management apparatus 22 only receives the interface configuration instructions, the configuration parameter set corresponding to each switching device includes the interface configuration parameters. When the management apparatus 22 only receives the topology configuration instructions, the configuration parameter set corresponding to each switching device includes the topology configuration parameters. When the management apparatus 22 receives the interface configuration instructions and the topology configuration instructions, the configuration parameter set corresponding to each switching device includes the interface configuration parameters and the topology configuration parameters.

In this embodiment, the embedded controller within each switching device includes the plurality of configuration registers. The management apparatus 22 writes each configuration parameter from the configuration parameter set into a corresponding configuration register of the embedded controller of a corresponding switching device, thereby allowing the embedded controller to determine an interconnection status of the switching device and configure parameters of external interfaces by reading the configuration registers, ensuring that the interconnection apparatus 21 meets topological requirements of a current application scenario, and enhancing the flexibility of adjusting an interconnection topology structure.

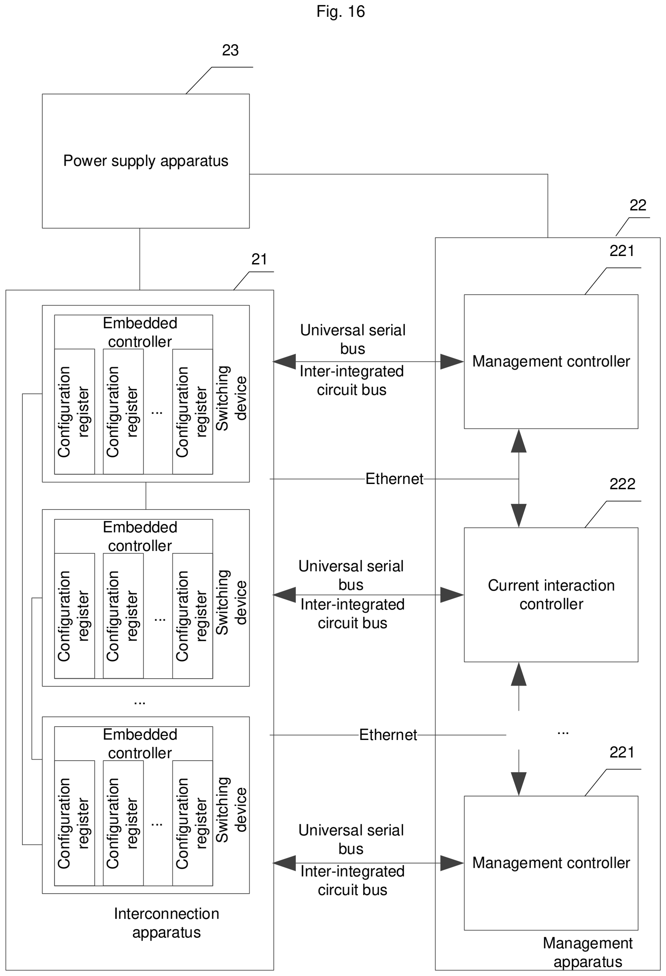

As an exemplary embodiment, referring to Fig. 16, the management apparatus 22 includes a plurality of management controllers 221, all of which are connected to the interconnection apparatus 21;
a current interaction controller 222 is configured to perform data interaction with the interconnection apparatus 21; and the current interaction controller 222 is any one of the plurality of management controllers 221 that is in a normal operating status.

In this embodiment, the management apparatus 22 includes the plurality of management controllers 221 that operate in a hot standby mode. The management controllers 221 are primarily responsible for functions such as topology switching management, management data transmission, and ID recognition of the interconnection apparatus 21, which is a core module of the high-performance switching apparatus. The redundant design is intended to meet the needs for control signal switching between the management apparatus 22-baseboard controller and the management apparatus 22-switching device in a failure status. Each management controller 221 is connected to each switching device within the interconnection apparatus 21. In this embodiment, one management controller 221 in a normal operating status is selected from the plurality of management controllers 221 as the current interaction controller 222. The current interaction controller 222 is configured to perform data interaction with each switching device, and the data interaction includes, but is not limited to, sending the configuration parameter sets to each switching device within the interconnection apparatus 21, acquiring status parameters of each switching device, acquiring device parameters of the external devices connected to each switching device, etc.

In an exemplary embodiment, communication efficiency and/or proximity may be used as selection criteria for the current interaction controller 222. Certainly, random selection or other selection solutions may be employed, and this embodiment does not impose any limitations in this regard.

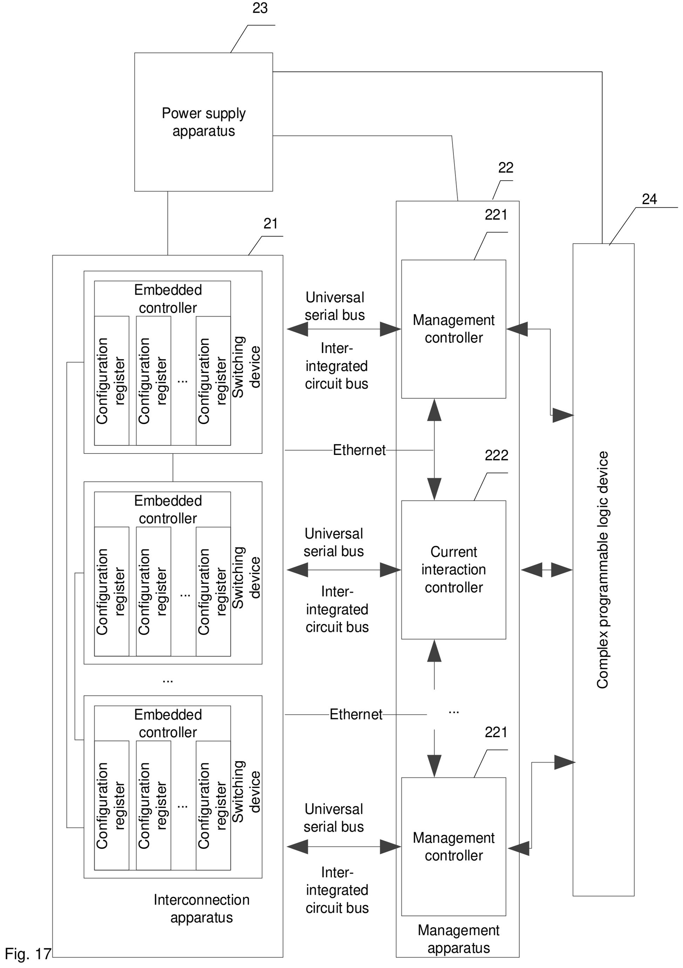

As an exemplary embodiment, referring to Fig. 17, the high-performance switching apparatus further includes a complex programmable logic device 24;
each management controller 221 is also configured to send heartbeat signals to the complex programmable logic device 24 at preset intervals; and
the complex programmable logic device 24 is configured to determine whether a faulty controller in an abnormal operating status exists among the plurality of management controllers 221, in a case where it is determined that the faulty controller in the abnormal operating status exists among the plurality of management controllers 221, in a case where it is determined that the faulty controller is the current interaction controller 222, control the faulty controller to stop performing data interaction with the interconnection apparatus 21, and select any one of the plurality of management controllers 221 that is in the normal operating status as a new current interaction controller 222, where the abnormal operating status refers to an operating status in which the heartbeat signals are not sent at the preset intervals.

In this embodiment, the high-performance switching apparatus also includes the complex programmable logic device (CPLD) 24. A heartbeat port of each management controller 221 is connected to the CPLD. Each management controller 221 sends the heartbeat signals to the CPLD through the heartbeat port at the preset intervals. The CPLD is configured to determine whether the heartbeat signals sent by each management controller 221 are received within the preset intervals corresponding to the management controller 221. In a case where there is a management controller 221 that fails to send a heartbeat message at the preset intervals, it is determined that the management controller 221 is currently in the abnormal operating status, and the management controller 221 currently in the abnormal operating status is determined as the faulty controller. The CPLD determines whether the faulty controller is the current interaction controller 222 that is set to perform data interaction with each switching device. In a case where the CPLD determines that the faulty controller is the current interaction controller 222 that is set to perform data interaction with each switching device, to ensure the normal operation of the system, the current interaction controller 222 is controlled to stop performing data interaction with each switching device. One management controller 221 is determined from all management controllers 221 that are in the normal operating status excluding the faulty controller to be the new current interaction controller 222, and data interaction with each switching device is performed through the new current interaction controller 222. In a case where the faulty controller is not the current interaction controller 222, a prompt message corresponding to the faulty controller is generated to remind a worker to perform maintenance operations on the faulty controller in time.

Exemplarily, assume that the high-performance switching apparatus includes two management controllers 221, namely, a first management controller and a second management controller, the two management controllers 221 are currently in the normal operating status, and the first management controller is determined as the current interaction controller 222 for data interaction with each switching device. In a case where the CPLD detects that the first management controller fails to send the heartbeat signals at the preset intervals, it is determined that the first management controller is in the abnormal operating status, and the first management controller is determined as the faulty controller. The first management controller is controlled to stop performing data interaction with each switching device. In this case, In a case where the second management controller is in the normal operating status, the second management controller is determined as the current interaction controller 222 for data interaction with each switching device, thereby enhancing the operational safety of the high-performance switching apparatus.

As an exemplary embodiment, the plurality of management controllers 221 include a primary management controller and one or more secondary management controllers. The one or more secondary management controllers are management controllers 221 excluding the primary management controller among the plurality of management controllers 221.

The complex programmable logic device 24 is further configured to, in a case where it is determined that the current interaction controller 222 is one of the secondary management controllers and it is determined that there is a primary management controller in the normal operating status, control the current interaction controller 222 to stop performing data interaction with the interconnection apparatus 21 and select a primary management controller in the normal operating status as the new current interaction controller 222.

In this embodiment, communication efficiency and/or proximity may be used as selection criteria for the primary management controller. That is, the communication efficiency between the primary management controller and the switching devices or the baseboard controller should be higher than that between the secondary management controllers and the switching devices or the baseboard controller. Therefore, when determining the current interaction controller 222, a principle of prioritizing the primary management controller may be applied to select the current interaction controller 222. In a case where there is no primary management controller in the normal operating status at the current time, one of the secondary management controllers in the normal operation status is selected as the current interaction controller 222. In a case where the secondary management controller acts as the current interaction controller 222 for data interaction with each switching device, the CPLD detects that there is a primary management controller in the normal operating status, the management authority is transferred back to the primary management controller. That is, the secondary management controller acting as the current interaction controller 222 is controlled to stop performing data interaction with each switching device, and the primary management controller in the normal operating status is controlled to act as the new current interaction controller 222, thereby enhancing the communication efficiency.

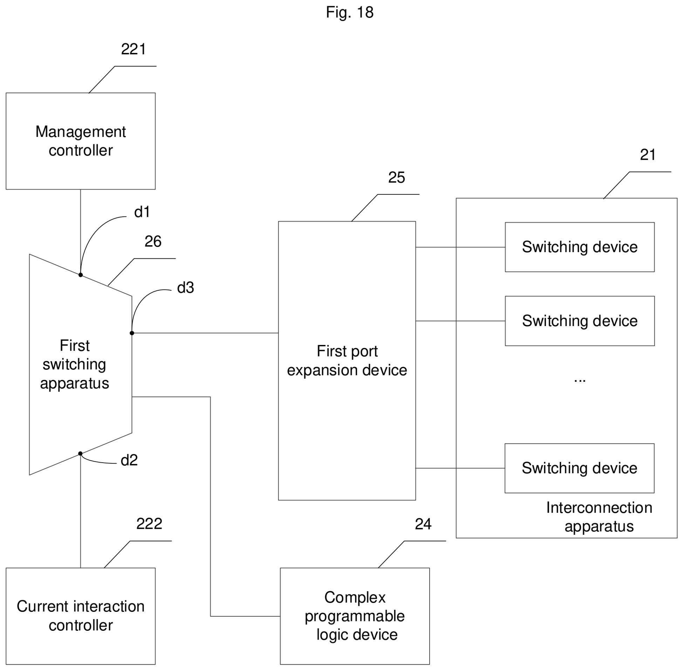

As an exemplary embodiment, referring to Fig. 18, the high-performance switching apparatus further includes:
a first port expansion device 25, where a first end of the first port expansion device 25 is connected to one of the plurality of second ends of the first switching apparatus 26, and a plurality of second ends of the first port expansion device 25 are connected to the plurality of switching devices in a one-to-one correspondence manner.

In this embodiment, port control is performed through the first port expansion device 25, which, on the one hand, reduces the occupation of ports on the first switching apparatus and, on the other hand, allows the interconnection apparatus 21 to mount more switching devices, thereby establishing a larger system topology and enhancing system computing power.

As an exemplary embodiment, referring to Fig. 18, the high-performance switching apparatus also includes the first switching apparatus 26. A plurality of first ends of the first switching apparatus 26 are connected to the plurality of management controllers 221 in a one-to-one correspondence manner, and the plurality of second ends of the first switching apparatus 26 are connected to the plurality of switching devices in a one-to-one correspondence manner. A control end of the first switching apparatus 26 is connected to the complex programmable logic device 24.

The complex programmable logic device 24 is configured to determine whether there is a faulty controller among the plurality of management controllers 221 that is in the abnormal operating status, in a case where it is determined that the faulty controller among the plurality of management controllers 221 that is in the abnormal operating status exists, determine whether the faulty controller is the current interaction controller 222, In a case where it is determined that the faulty controller is the current interaction controller 222, generate a first control instruction corresponding to the faulty controller, select any one of the plurality of management controllers 221 that is in the normal operating status as a new current interaction controller 222, and generate a second control instruction corresponding to the new current interaction controller 222.

The first switching apparatus 26 is configured to, when receiving the first control instruction, determine a first target end based on the first control instruction and disconnect a communication link between the management controller 221 connected to the first target end and each switching device, and when receiving the second control instruction, determine a second target end based on the second control instruction, and connect a communication link between the management controller 221 connected to the second target end and each switching device.

In this embodiment, the high-performance switching apparatus also includes the first switching apparatus 26. Each management controller 221 is connected to one of the plurality of first ends of the first switching apparatus 26. The plurality of second ends of the first switching apparatus 26 are connected to the plurality of switching devices in a one-to-one correspondence manner. The CPLD adjusts statuses of a plurality of communication links in the first switching apparatus 26 by sending corresponding control instructions to the first switching apparatus 26. The communication link statuses include a connected status or a disconnected status.

Assume that the high-performance switching apparatus includes the first management controller and the second management controller. The first management controller is connected to one first end (d1) of the first switching apparatus 26, and the second management controller is connected to another first end (d2) of the first switching apparatus 26. One second end (d3) of the first switching apparatus 26 is connected to one port of the first port expansion device. When the first management controller is in the normal operating status and serves as the primary management controller, the first switching apparatus 26 controls a communication link between d1 and d3 to be in the connected status and a communication link between d2 and d3 to be in the disconnected status. When the first management controller is in the abnormal operating status and the second management controller is in the normal operating status, under the control of the first control instruction and the second control instruction sent by the CPLD, the first switching apparatus 26 controls the communication link between d1 and d3 to be in the disconnected status and the communication link between d2 and d3 to be in the connected status.

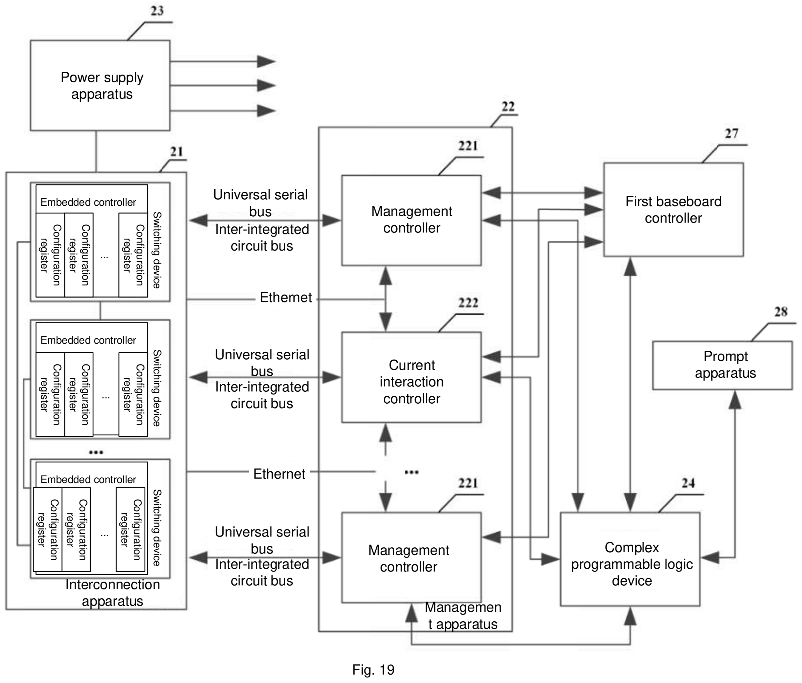

As an exemplary embodiment, referring to Fig. 19, a process of data interaction with the interconnection apparatus 21 includes:
writing each configuration parameter in each configuration parameter set into the corresponding configuration register in the embedded controller of the switching device; and
acquiring the status parameters of each switching device and the device parameters of the external devices connected to each switching device.

The high-performance switching apparatus further includes:
a first baseboard controller 27 connected to each management controller 221, which is configured to determine a current topological status of the interconnection apparatus 21 through the status parameters of each switching device and generate a current status prompt instruction based on the current topological status; and
a prompt apparatus 28.

The complex programmable logic device 24 is also configured to, in response to the current status prompt instruction, control the prompt apparatus 28 to prompt the current topological status information.

In this embodiment, the high-performance switching apparatus also includes the first baseboard controller 27 and the prompt apparatus 28. The current interaction controller 222 acquires the status parameters of each switching device and the device parameters of the external devices connected to each switching device. The first baseboard controller 27 may determine the current topological status of the interconnection apparatus 21 according to parameters such as the status parameters of each switching device and the device parameters of the external devices connected to each switching device, and then control the prompt apparatus 28 to prompt the corresponding topological status information for the worker to view. In a case where the current topological status does not match a preset status, the worker may promptly check and make adjustments.

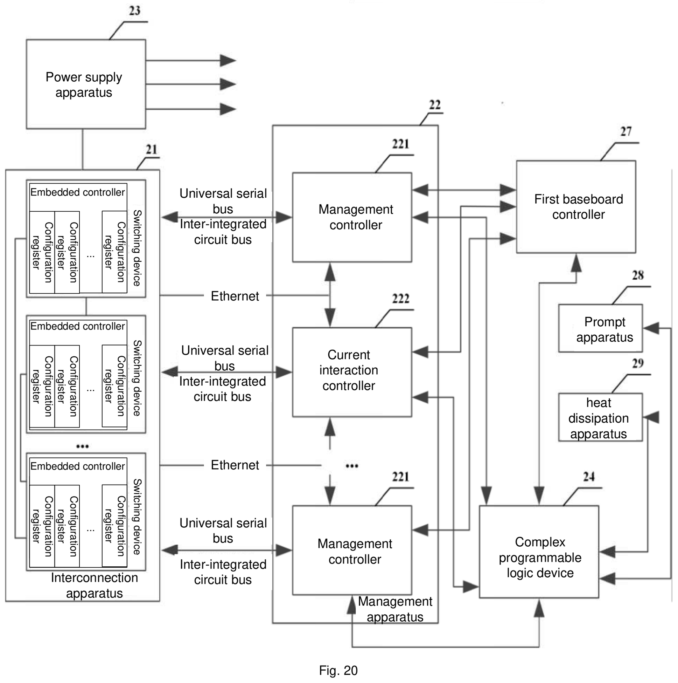

As an exemplary embodiment, referring to Fig. 20, the high-performance switching apparatus further includes: a heat dissipation apparatus 29. The heat dissipation apparatus 29 includes at least one fan.

The first baseboard controller 27 is also configured to generate a current cooling control instruction based on the current topological status and the device parameters; and
the complex programmable logic device 24 is also configured to, in response to the current heat dissipation control instruction, adjust a rotational speed of the fan.

In this embodiment, the high-performance switching apparatus also includes the heat dissipation apparatus 29. A cooling level of the heat dissipation apparatus 29 may be dynamically adjusted according to the current interconnection topology architecture and the number of devices under this architecture, thereby enhancing the operational safety of the high-performance switching apparatus.

As an exemplary embodiment, the first baseboard controller 27, the management controllers 221, the complex programmable logic device 24, and the interconnection apparatus 21 are connected through the Ethernet. The first baseboard controller 27, the management controllers 221, the complex programmable logic device 24, and the interconnection apparatus 21 are connected through the universal serial bus or the inter-integrated circuit bus.

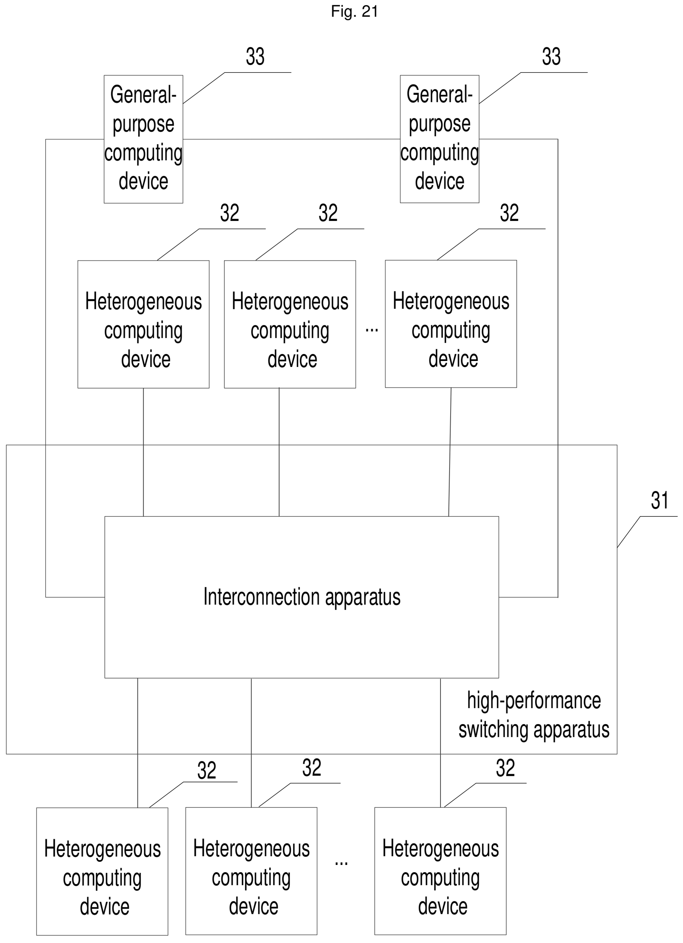

In a third aspect, referring to Fig. 21, this application further provides a large model all-in-one machine. The large model all-in-one machine includes:
the high-performance switching apparatus 31 as described in any of the above-mentioned embodiments;
a plurality of general-purpose computing devices 33, which are connected to the interconnection apparatus of the high-performance switching apparatus 31; and
a plurality of heterogeneous computing devices 32, which are connected to the interconnection apparatus.

Any two computing devices connected on the interconnection apparatus are interconnected, where the computing devices are either the general-purpose computing devices 33 or the heterogeneous computing devices 32.

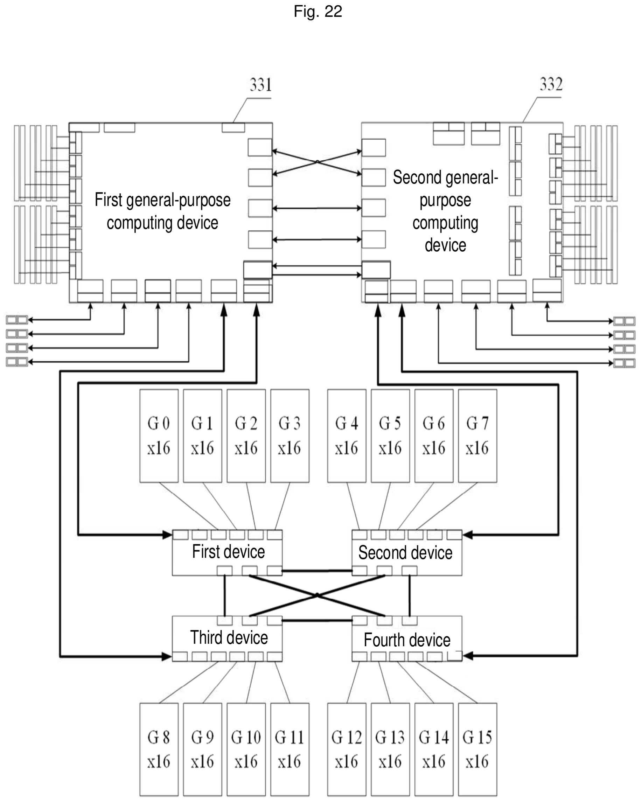

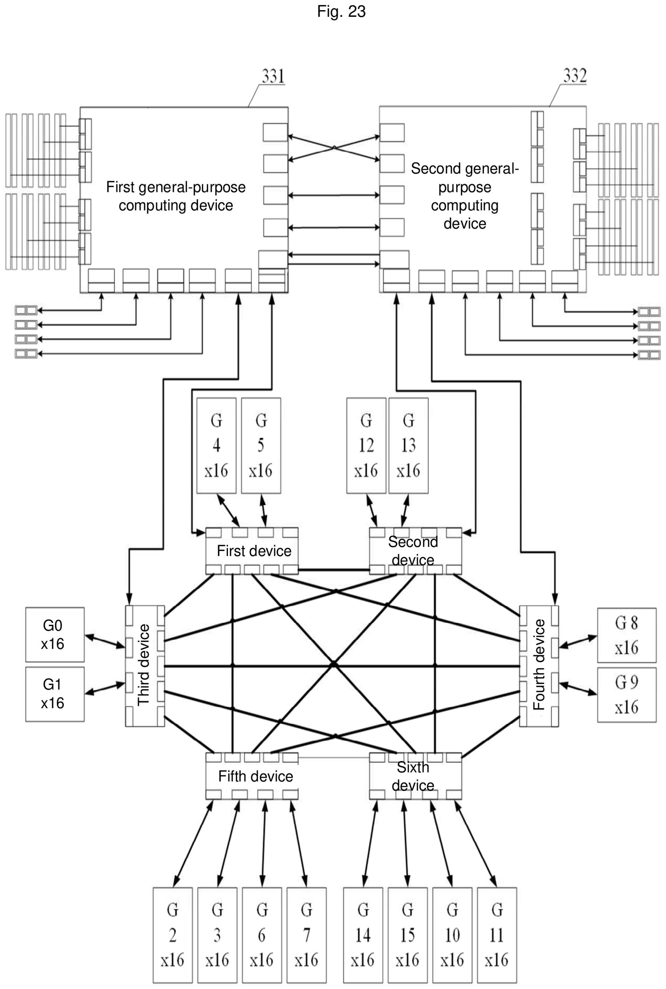

In this embodiment, the plurality of general-purpose computing devices 33 and the plurality of heterogeneous computing devices 32 are all connected to the corresponding switching devices in the interconnection apparatus. The general-purpose computing devices 33 and the heterogeneous computing devices 32 are connected to the external interfaces of the switching devices. As shown in Fig. 22, the interconnection apparatus includes four switching devices (the first device, the second device, the third device, and the fourth device respectively), and the four switching devices form a 2×2 interconnection topology architecture. The large model all-in-one machine includes two general-purpose computing devices 33 (a first general-purpose computing device 331 and a second general-purpose computing device 332 respectively) and sixteen heterogeneous computing devices 32. The heterogeneous computing devices 32 may be full-height and full-length GPUs, represented as G0 to G15 in Fig. 22. In Fig. 22, every four GPUs form a group, with a total of four groups. Referring to Fig.23, the interconnection apparatus includes six switching devices, and the six switching devices (the first device, the second device, the third device, the fourth device, the fifth device, and the sixth device respectively) form a 2×3 interconnection topology architecture. The large model all-in-one machine includes two general-purpose computing devices 33 (the first general-purpose computing device 331 and the second general-purpose computing device 332 respectively) and sixteen heterogeneous computing devices 32. The heterogeneous computing devices 32 may be full-height and full-length GPUs, represented as G0 to G15 in Fig. 23. The large model all-in-one machine provided in this embodiment supports a plurality of cards within a single machine, thereby improving a computational density. The two general-purpose computing devices 33 have a total of four standard PCIE x16 slots, which are respectively connected to four switching devices, meeting an upstream-downstream ratio relationship between the general-purpose computing devices 33 and the heterogeneous computing devices 32.

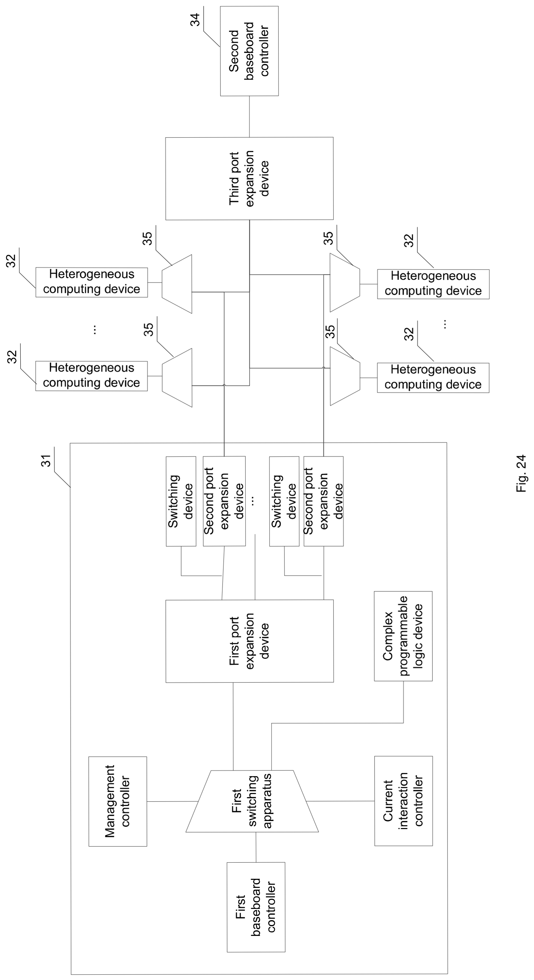

As an exemplary embodiment, referring to Fig. 24, the large model all-in-one machine also includes a second baseboard controller 34 and a plurality of second switching apparatuses 35.

First ends of the plurality of second switching apparatuses 35 are connected to the plurality of heterogeneous computing devices 32 in a one-to-one correspondence manner. A second end of each second switching apparatus 35 is connected to the second baseboard controller 34, and a third end of each second switching apparatus 35 is connected to the high-performance switching apparatus 31.

In this embodiment, a heterogeneous computing acceleration pooling board composed of the plurality of heterogeneous computing devices 32 also includes the second baseboard controller 34 and the plurality of second switching apparatuses 35. The first ends of the plurality of second switching apparatuses 35 are connected to the plurality of heterogeneous computing devices 32 in the one-to-one correspondence manner. The second end of each second switching apparatus 35 is connected to the second baseboard controller 34, and the third end of each second switching apparatus 35 is connected to the high-performance switching apparatus 31, thereby allowing the heterogeneous computing devices 32 to perform data interaction with the high-performance switching apparatus 31 and the second baseboard controller 34 through two links, respectively, providing more data pathways for software development. As shown in Fig. 24, for port expansion, the high-performance switching apparatus 31 also includes a plurality of second port expansion devices. The third ends of the second switching apparatuses 35 are connected to the second port expansion devices in the high-performance switching apparatus 31. The large model all-in-one machine also includes a third port expansion device. This embodiment is implemented through a management hardware architecture that supports a dual-redundant system. A management core is a set of high-performance data link topology identification, high-performance data link topology switching, and visual operation interface management software running on the management controller. Through software-defined methods, a service-aware resource reconstruction decision-making system is established to achieve functions such as dynamic allocation of upstream and downstream links, link topology switching, and dynamic reconstruction of data links, complete intelligent reconstruction of hardware resources, and achieve resource pooling and centralized management, thereby allowing for dynamic adjustment, flexible combination, and intelligent allocation, improving the computational efficiency and response speed of the entire system, achieving intelligent and efficient heterogeneous computing, and covering application requirements of mainstream models and business scenarios.

As an optional embodiment, the high-performance switching apparatus 31 may use an IT968GSE+RTF3 low-loss PCB. Each switching device is interconnected through a PCIE GEN5x16 bus. With memory channel I/O (MCIO) high-speed cables, a maximum of four switching devices can be physically connected on a single board. Each processor supports flexible bifurcation operations. In addition to supporting conventional PCIE, UART, and IIC links, the heterogeneous computing acceleration pooling board also supports network data interaction links, providing more efficient and faster data transmission. Two homologous clock CLK BUFFER (Clock BUFFER) and non-homologous CLK lines may be added to the high-performance switching apparatus 31 to provide more reliable input clock source redundancy characteristics. All key signals such as management, control, and status monitoring of the high-performance switching apparatus 31 are connected to a baseboard computer on module express (COME) module and a run baseboard management controller (RunBMC) module for real-time status detection. Once the machine experiences abnormal conditions (abnormal operations of the switching devices or error alarms on switching links), the RunBMC module transmits the data upward to give an alarm and simultaneously detect detailed time scales of the signals, and saves the detailed time scales in the form of logs on a TF (TransFlash, transmission flash) card for the user to retrieve and analyze the causes of the abnormalities.

As an exemplary embodiment, the large model all-in-one machine also includes a plurality of network interface cards. The interconnection apparatus includes a plurality of switching devices, and each switching device is connected to at least one network interface card, thereby allowing the heterogeneous computing devices 32 connected to the interconnection apparatus to form a network with other large model all-in-one machines through the network interface cards.

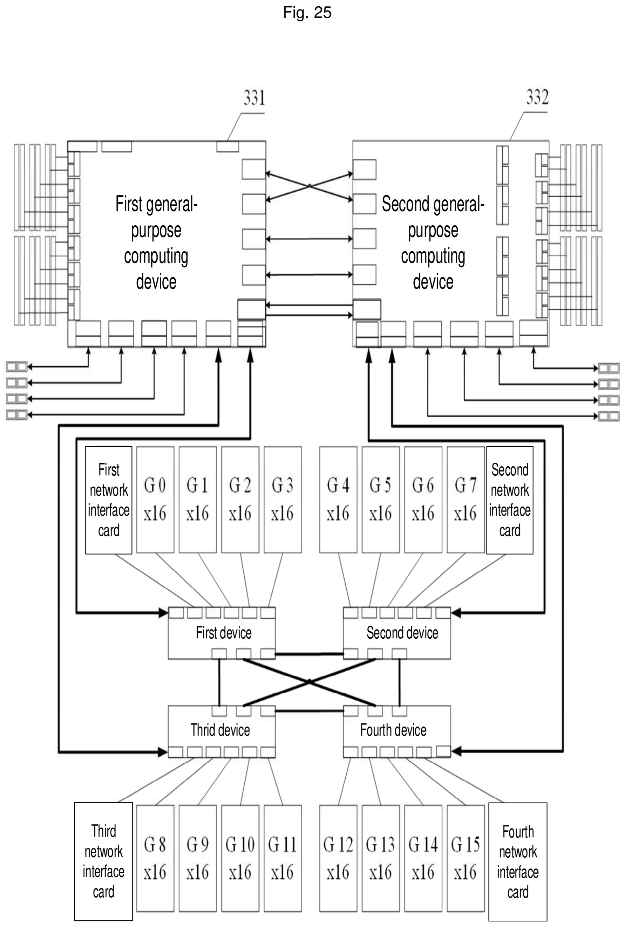

In this embodiment, the network interface cards are added within the topology, and are connected to the external interfaces on the switching devices. Based on the large model all-in-one machine provided in Fig. 22, as shown in Fig. 25, taking sixteen heterogeneous computing devices 32 (the first heterogeneous computing device G0, the second heterogeneous computing device G1, ..., and the sixteenth heterogeneous computing device G15), two general-purpose computing devices 33 (the first general-purpose computing device 331 and the second general-purpose computing device 332), the interconnection apparatus including four switching devices (the first device, the second device, the third device, and the fourth device), and four network interface cards (the first network interface card, the second network interface card, the third network interface card, and the fourth network interface card) as examples for illustration, G0, G1, G2, and G3 achieve external network interconnection through the first network interface card to expand an interconnection bandwidth of the large model all-in-one machine, supporting remote direct memory access(RDMA) interconnection for eight 800G high-speed networks. It should be understood that x16 in Fig. 25 is used to indicate the bandwidth.

As an exemplary embodiment, the interconnection apparatus includes a plurality of switching devices, and the large model all-in-one machine also includes a plurality of network interface cards. The heterogeneous computing devices are connected to the switching devices through the network interface cards, and the heterogeneous computing devices 32 form a network with other large model all-in-one machines through the network interface cards.

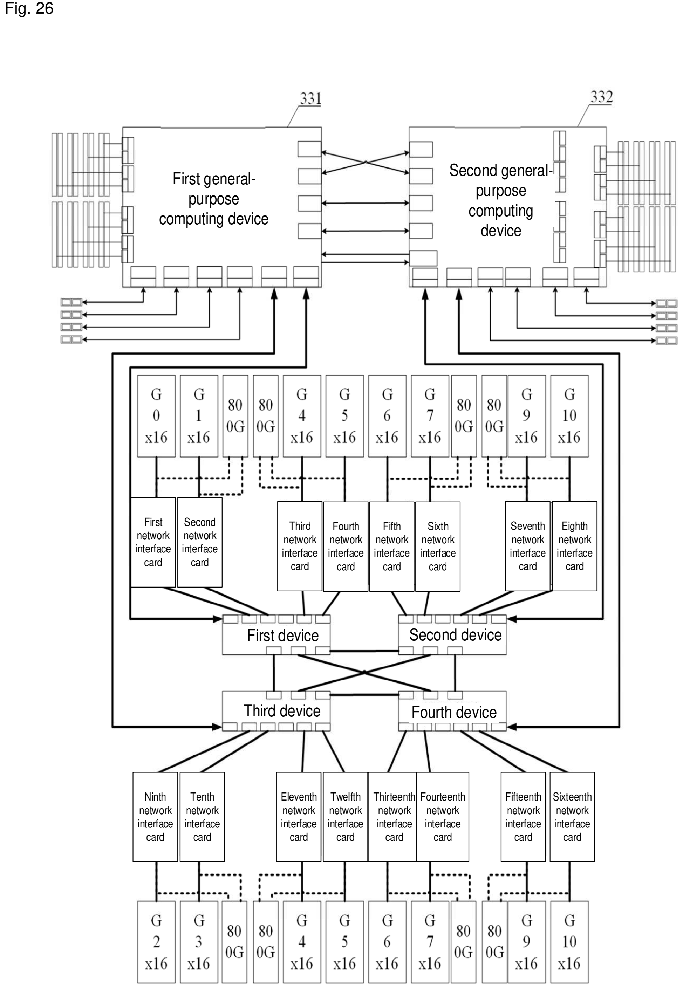

In this embodiment, a smart network interface card CX7 may also be selected to achieve external network interconnection. In this embodiment, each heterogeneous computing device 32 is not directly connected to the switching device but is connected to the switching device through the smart network interface card CX7, thereby reducing excessive occupation of the external interfaces of the switching devices. Based on the large model all-in-one machine provided in Fig. 22 and with reference to Fig. 26, in the large model all-in-one machine provided in this embodiment, an illustration is given using the example of: sixteen heterogeneous computing devices 32 (the first heterogeneous computing device G0, the second heterogeneous computing device G1,..., and the sixteenth heterogeneous computing device G15), two general-purpose computing devices 33 (the first general-purpose computing device 331 and the second general-purpose computing device 332), the interconnection apparatus including four switching devices (the first device, the second device, the third device, and the fourth device), and sixteen network interface cards (the first network interface card, the second network interface card,..., and the sixteenth network interface card).

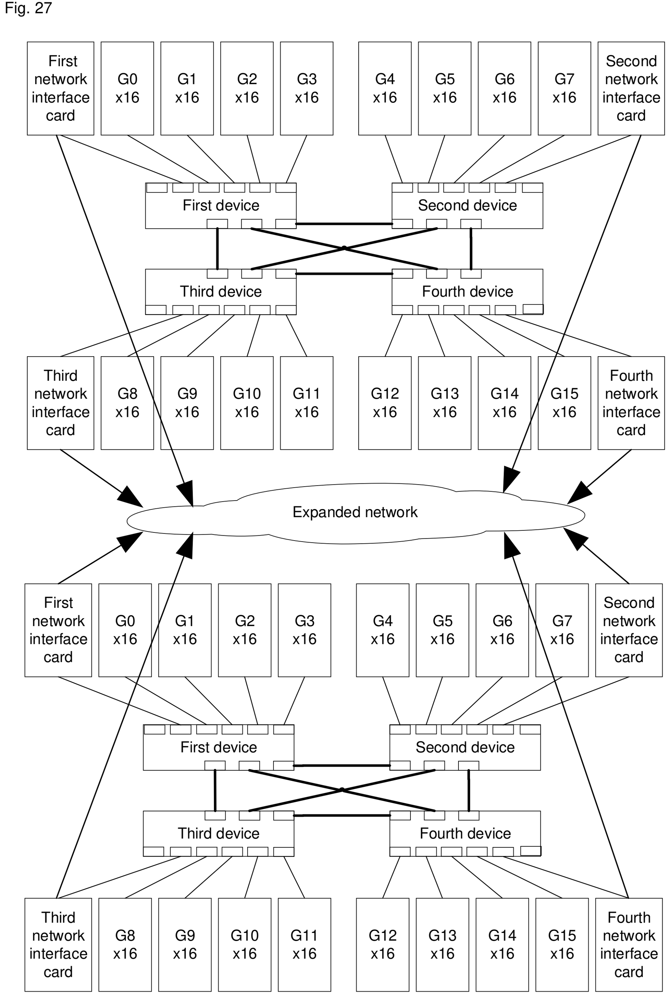

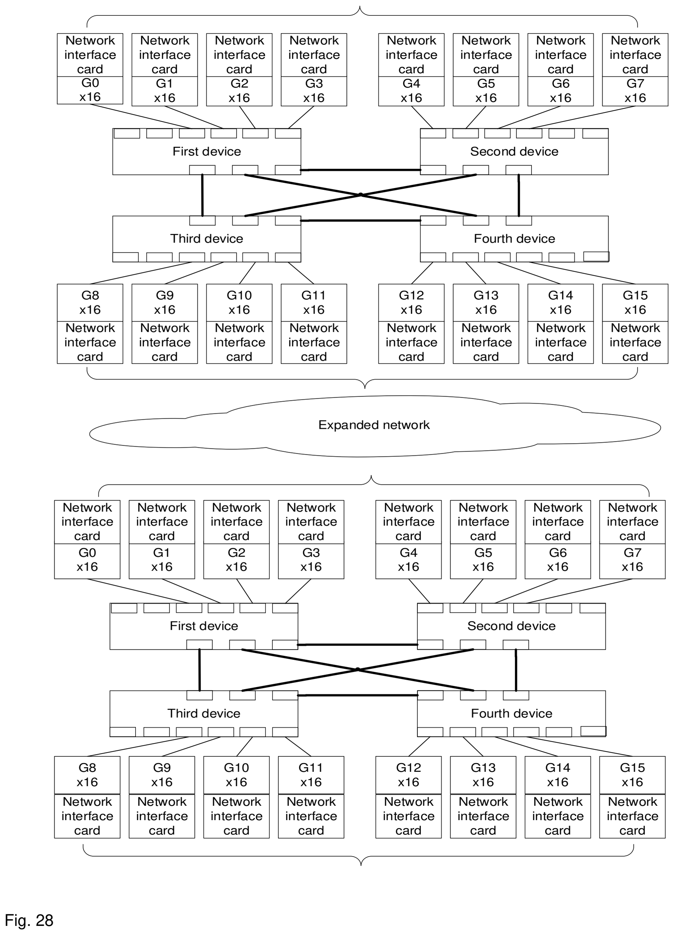

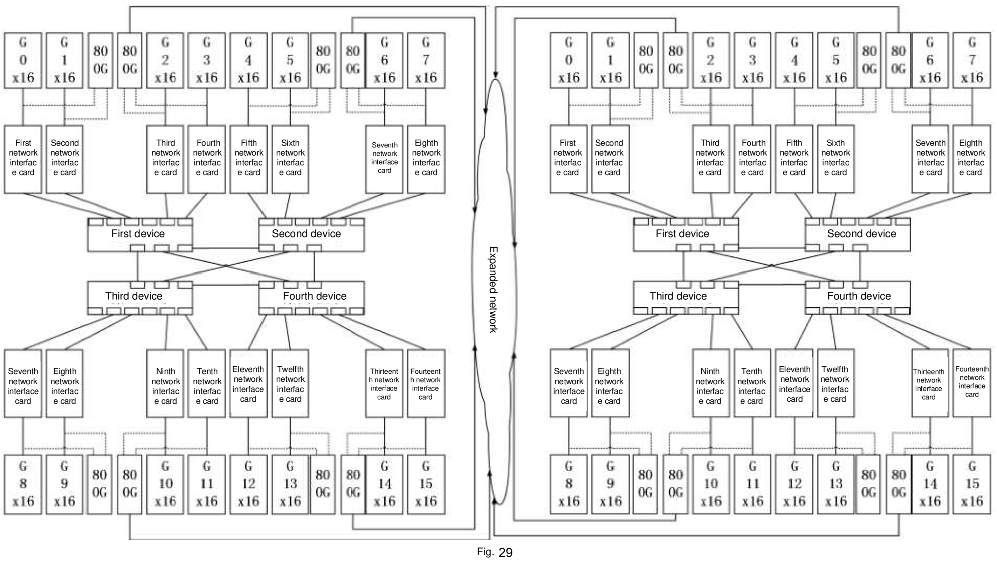

It should be understood that in terms of cluster network interconnection, a large model all-in-one machine system is designed with sufficient and flexible I/O resources, can support various large-scale cluster expansion methods, and flexibly meet application requirements. According to the cluster expansion methods in Fig. 27 to Fig. 29, Fig. 27 is a schematic diagram of first networking for a large model all-in-one machine according to this application, which illustrates a network interface card expansion method based on switching devices, Fig. 28 is a schematic diagram of second networking for a large model all-in-one machine according to this application, which illustrates a method where heterogeneous computing devices integrate network interface cards, achieving direct network port expansion, and Fig. 29 is a schematic diagram of third networking for a large model all-in-one machine according to this application, which illustrates a method of high-speed network expansion based on Cedar7 fusion devices.

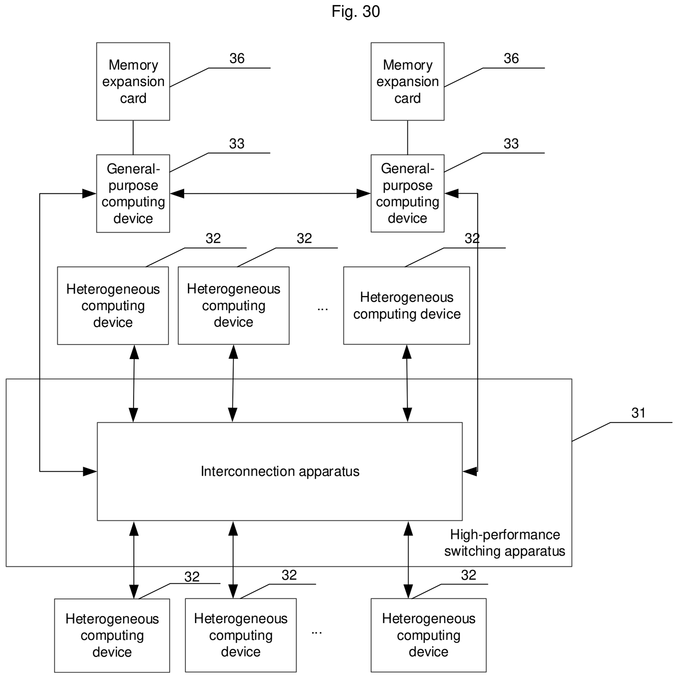

As an exemplary embodiment, referring to Fig. 30, the large model all-in-one machine also includes:
at least one memory expansion card 36, which is configured to store data to be processed; and
a general-purpose computing device 33, which is configured to acquire a local memory, where when the local memory is less than a preset value, the data to be processed is written into the memory expansion card 36.

To improve system reliability, the large model all-in-one machine provided in this embodiment also includes the at least one memory expansion card 36. When the local memory is insufficient, data access and storage are carried out through the memory expansion card 36. The memory expansion card 36 may be assembled in a rear-window dual-wide slot of the general-purpose computing device 33. A single machine can expand up to 4 memory expansion cards 36. Each memory expansion card 36 can expand 2 terabytes (T) of memory (256GB per memory module, with 8 memory modules per card), enabling a total expansion of 8T of memory. Coupled with 8T of the local memory, a single machine can achieve a system memory of up to 16TB. A standard dual-wide slot can accommodate the assembly of a dual-card module. By adopting a staggered vertical arrangement method, the single dual-card module can support two compute express link (CXL) expansion cards, thereby achieving high-density memory expansion to meet the requirements for high memory bandwidth and capacity in the Al large model all-in-one machine. CXL Add in Card is a CXL memory expander in the form of a PCIE standard Add in Card (AIC) (full-height 3/4 length dual-wide), and serial memory expansion is achieved through a CXL cache-coherent bus. In principle, flexible CXL serial memory expansion applications can be achieved for general-purpose servers that support the CXL protocol. Structurally, GPU slots can be replaced. A board card introduces 4x8 CXL2.0 signals through a 1x16 PCIE gold finger and a 1x16 MCIO connector. The board card supports the expansion of 8 DDR5-4800 RDIMMs, with a maximum expansion capacity of 2TB per card.

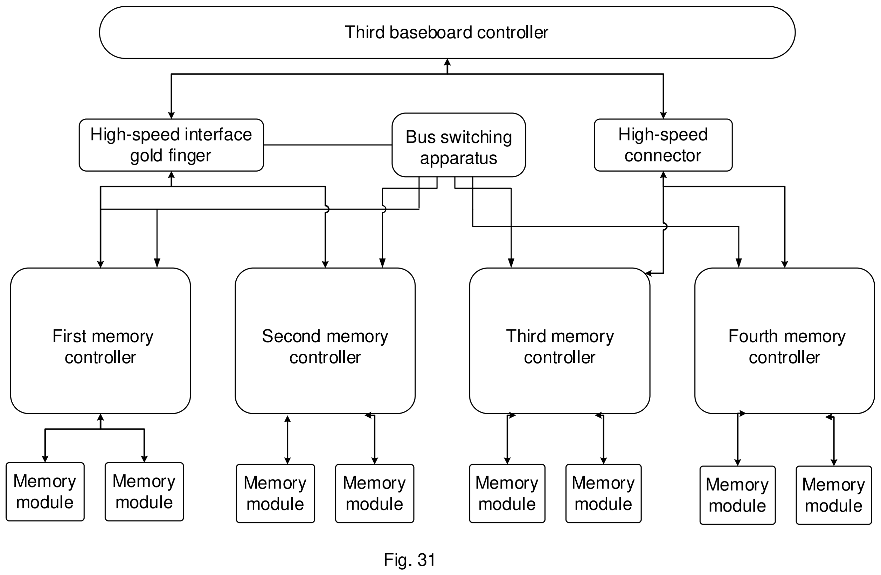

As an exemplary embodiment, referring to Fig. 31, the memory expansion card 36 includes a third baseboard controller and a plurality of memory controllers. Each memory controller is mounted with at least one memory module.

The third baseboard controller is configured to receive and forward memory access instructions sent by the general-purpose computing device 33, acquire status parameters of each memory controller, and acquire and send target data converted into serial data to the general-purpose computing device 33.

The memory controller is configured to parse memory access data in the memory access instructions, convert, when the memory access data is data to be written, the data to be written from serial data to parallel data and write the parallel data into the corresponding mounted memory module, and read, when the memory access data is data to be read, target data from the mounted memory module according to the data to be read, convert the target data from parallel data to serial data, and forward the serial data to the third baseboard controller.

In this embodiment, each memory expansion board can support 4 memory controllers with x8 bandwidth. Each memory controller may mount at least one registered dual in-line memory module (RDIMM) memory module for memory expansion, and a single board can support a total of 8 RDIMM expansions. A CXL x8 link of a first memory controller and a CXL x8 link of a second memory controller form a 2x8 CXL link, which is externally interconnected through a high-speed interface PCIE gold finger x16 interface. A CXL x8 link of a third memory controller and a CXL x8 link of a fourth memory controller form a 2x8 CXL link, which is externally interconnected through a high-speed connector MCIO x16 interface to support a host in achieving serial memory expansion through CXL links. Inter-integrated circuit (I2C) signals of the memory controllers communicate with the third baseboard controller through a bus switching apparatus, namely an I2C switch, to support debug operations. The communication between the I2C switch and the third baseboard controller is accessed from a baseboard through a high-speed interface gold finger. A connection method between the memory controllers and the third baseboard controller in Fig. 31 is only for illustration. The third memory controller and the fourth memory controller may also be connected to the third baseboard controller through a high-speed interface PCIE gold finger, and the first memory controller and the second memory controller may also be connected to the third baseboard controller through a high-speed connector. The bus switching apparatus may also be connected to one end of the high-speed connector. Considering that the gold finger has many pins, a low-speed port is selected from the plurality of pins of the gold finger to connect to the I2C switch, or a low-speed connector is separately set up to connect to the I2C switch. One end of the memory controller connected to the high-speed connector or the high-speed interface PCIE gold finger transmits the serial data, and one end of the memory controller connected to the memory module transmits the parallel data. The memory controller is configured to convert between the serial data and the parallel data.

It should be understood that each memory controller is configured to parse serial data packets sent by the third baseboard controller and convert the serial data packets into a parallel DDR format for distribution. Each memory controller also includes a plurality of status registers, which are configured to store status parameters of the memory controller and the memory module mounted on the memory controller. The third baseboard controller is configured to perform management operations, such as detecting the presence of the memory module and the memory controller, controlling temperatures, and sending instructions to the memory controller by reading the status registers of the memory controller. The status parameters include memory module operational status information, memory fault information, or the like.

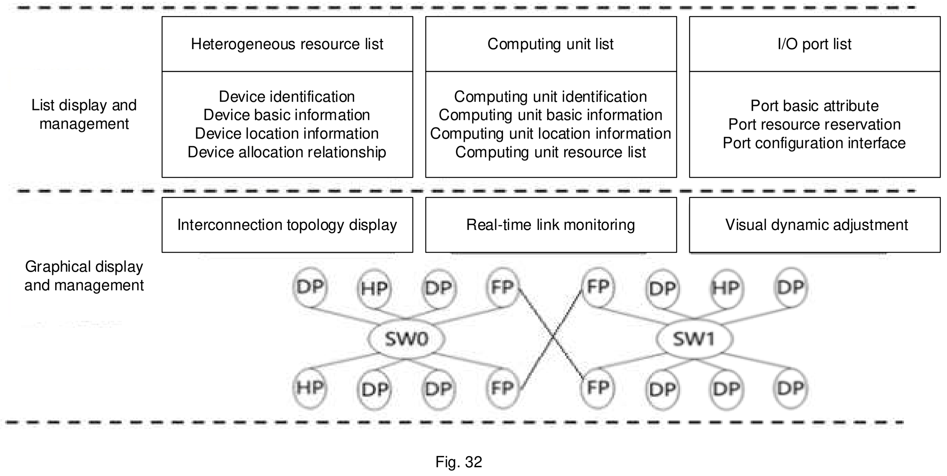

For the Al large model all-in-one machine, thanks to powerful resource expansion capabilities of the high-performance switching apparatus 31, key devices such as CPUs and heterogeneous computing resources may be decoupled to enable modular design. Each module is designed with a unified interface and is uniformly connected to a high-performance switching unit. A resource management module invokes a CLI interface to acquire information about a heterogeneous device resource pool from an embedded controller side of an I/O switching device, and also provides a network API interface for a visual WEB unit, thereby achieving more flexible and convenient display of I/O resource lists and topologies through a visual interface. As shown in Fig. 32, list display and management, as well as graphical display and management are mainly included, where the list display and management include heterogeneous resource lists, computing unit lists, and I/O port lists. The graphical display and management include interconnection topology display, real-time link monitoring, and visual dynamic adjustment. A heterogeneous computing resource list includes: device vendor information (VID (Vendor ID), DID (Device ID)), a device type, a device rated bandwidth and speed, an actual bandwidth and speed, a device location, and a device allocation status: whether a host is using the device and a location of the host, as well as device allocation management. Meanwhile, a pooling management engine also acquires and displays information about the host in a heterogeneous computing system, mainly including: an allocated device resource status of the host: whether devices are allocated to the host and location information of these devices, a location of the host device, and health status monitoring of device links used by the host. An I/O port list section mainly includes: basic attributes of I/O ports, an I/O port resource reservation status, and I/O port configuration interfaces. Through a WEB graphical user interface (GUI) interface, graphical display and management of the heterogeneous computing resources are provided. The user may dynamically allocate the resources and monitor the device links in real time in an interconnection topology view by dragging and dropping. In Fig. 32, DP represents downstream ports, HP represents upstream ports, and FP represents interconnection ports.

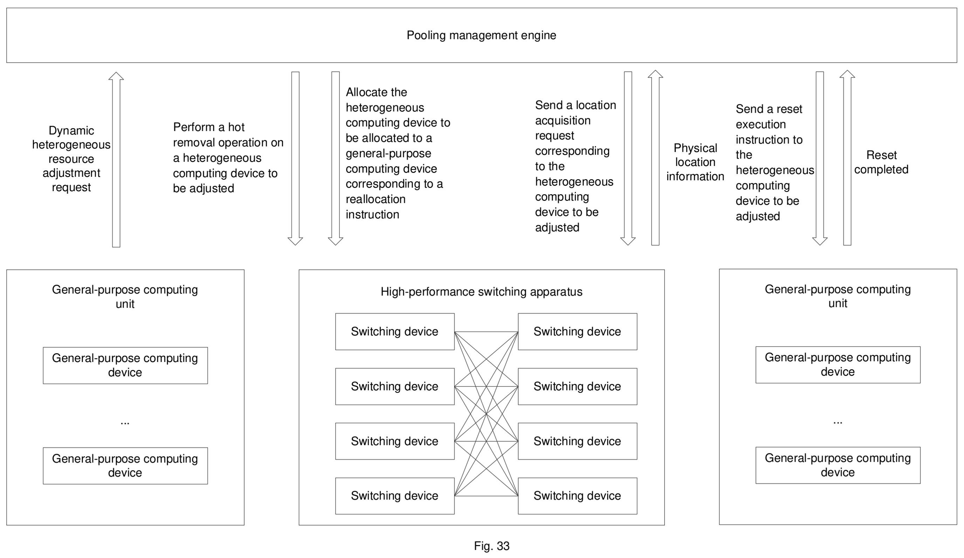

As an exemplary embodiment, referring to Fig. 33, the large model all-in-one machine also includes: the pooling management engine.

The general-purpose computing device 33 is also configured to initiate a dynamic heterogeneous resource adjustment request.

The pooling management engine is configured to, when receiving the dynamic heterogeneous resource adjustment request, determine a heterogeneous computing device 32 to be adjusted based on the dynamic heterogeneous resource adjustment request, perform a hot removal operation on the heterogeneous computing device 32 to be adjusted, send a location acquisition request corresponding to the heterogeneous computing device 32 to be adjusted to the high-performance switching apparatus, send, based on received physical location information, a reset execution instruction to the heterogeneous computing device 32 to be adjusted, after receiving a reset completion instruction, determine the heterogeneous computing device 32 to be adjusted as a heterogeneous computing device 32 to be allocated, and when receiving a reallocation instruction, allocate the heterogeneous computing device 32 to be allocated to the general-purpose computing device 33 corresponding to the reallocation instruction.

The heterogeneous computing device 32 is configured to perform a reset operation after receiving the reset execution instruction and generate the reset completion instruction after successfully executing the reset operation.

The high-performance switching apparatus 31 is configured to acquire and return the physical location information of the heterogeneous computing device 32 to be adjusted to the pooling management engine after receiving the location acquisition request.

The user may use interfaces provided by the pooling management engine to perform operations such as on-demand allocation, dynamic scaling, and resource release for general-purpose, heterogeneous, and other computing devices as well as system resources. The user may match resources according to workload demands. When an application stops running, the user may release the resources back into the resource pool to facilitate efficient resource circulation and full utilization.

An optional dynamic resource switching process is illustrated with Fig. 33 as an example:
Taking the example of releasing a certain heterogeneous computing device 32 and allocating the heterogeneous computing device 32 to a certain general-purpose computing device 33, the user needs to ensure that application-layer processes associated with the heterogeneous computing device end before initiating a dynamic adjustment request for the heterogeneous computing resources through the pooling management engine, to prevent program abnormalities caused by unexpected application-layer access to the device. The pooling management engine completes the hot removal of the device, and sends a request to the high-performance switching apparatus 31 to acquire the physical location of the device. After confirming the physical location of the device, the pooling management engine resets the resources of the heterogeneous computing device and reinitiates training to restore an operational status to a default value. Once the pooling management engine confirms that the device reset is complete, the pooling management engine reallocates the device to another general-purpose computing device 33. The computing device detects a newly added device without any disruption to ongoing services, thereby completing the dynamic switching of the heterogeneous computing resources. Based on the above-mentioned embodiments, to dissolve a physical link-level binding relationship between the heterogeneous computing device 32 and the CPU, and to achieve on-demand, elastic allocation of the heterogeneous computing resources by a general-purpose computing unit, different expert templates for device allocation relationships may be established within the pooling management engine for various application scenarios. During application scenario switches, automatic topology switching can be completed according to different templates, simplifying a process of switching the application scenarios. Based on network **API** interfaces provided by the pooling management engine, researches are carried out on system interface standards, and framework-level system standards are established, to implement expert template descriptions and dynamic interface switching for the heterogeneous computing resources, thereby allowing applications to apply for resources in accordance with the expert templates. Meanwhile, callable APIs are provided to facilitate the visual application of the expert templates and to display a logical topology of allocated resources.

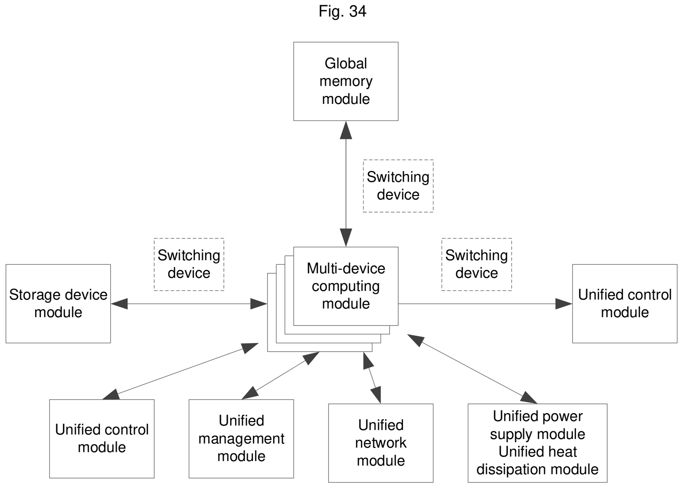

Through hardware decoupling and standardized interface definitions, modular designs for the heterogeneous computing unit, storage resources, the I/O resources, and memory resources are achieved. A host system is formed through unified management, networks, power supply, and cooling, while the software-defined system design offers flexible provisioning of diverse computing capabilities. A top-level architecture of the standardized definition is illustrated in Fig. 34. Multi-core computing modules are consistently interconnected with storage device modules, input/output (IO) device modules, and global memory modules through standard interfaces. Resource sharing and dynamic allocation are implemented through the switching devices. A unified control module handles core scheduling and coordination of diverse computing capabilities, while the multi-core computing modules maintain global cache coherence through an open internal cache coherence bus. The entire system achieves system-level integration through foundational modules such as a unified network module, a unified management module, and a unified power supply and cooling module, resulting in a system-level architecture with a plurality of cores in a single machine.

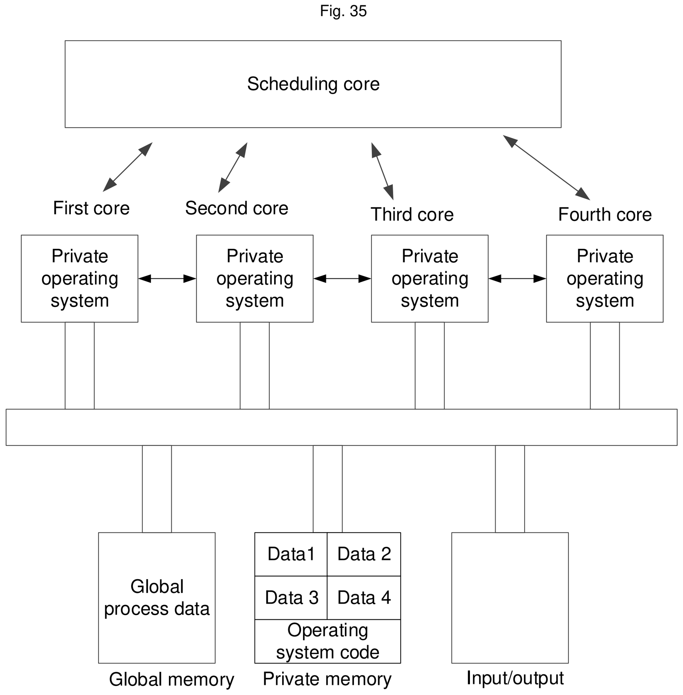

To fully leverage the performance of heterogeneous multi-core systems and adapt to various application scenarios, it is crucial for applications to freely migrate among a plurality of cores. However, migrating between heterogeneous multi-core systems with different instruction sets has long been a challenge in the industry. Load migration and resource scheduling are applied in the following scenarios: an operating system performs load balancing by migrating processes to static or lightly loaded cores; processes are migrated to cores with different instruction set architectures according to varying load types; when power consumption statues change, migration of some processes needs to be processed for power control; and when a core overheats, processes are migrated to other cores, etc. In this embodiment, the Al large model all-in-one machine is established, with an operating system including a plurality of kernels. Each kernel is compiled and runs under an instruction set of a specific instruction set architecture (ISA). The entire system achieves on-demand balanced scheduling of computing power for applications through unified system software. At the operating system level, inter-kernel communication and collaboration are implemented, thereby allowing the entire system to still maintain a global status across different ISA core running instances. Based on this, through a unified scheduling core and the application of advanced scheduling technologies, the applications are unaware of underlying hardware. The collaboration between the operating system and a scheduling system allows the applications to automatically select the optimal mapping, thereby enhancing the performance of multi-instruction-set heterogeneous multi-core systems, as shown in Fig. 35.

In summary, the large model all-in-one machine provided by this application adopts a system-centric design, innovating the design of artificial intelligence servers, and breaks through the limitation on the number of heterogeneous accelerator cards in conventional 8-card servers. By employing hardware decoupling and pooling, along with high-performance exchange via internal buses of the servers, a design for a single server with 16 accelerator cards is achieved, meeting high computational demands of artificial intelligence. Meanwhile, in a case where key core devices and components are restricted, technological blockades are overcome by systematic multi-card integration, thereby enhancing the overall performance of the system. In an era of rapid development in large model applications, multi-card server clusters can better enable model and data parallelism, meeting the computing power demands of artificial intelligence. The all-in-one machine design is adaptable to various scenarios of Al large models, including pre-training, fine-tuning, and inference, thereby significantly saving the design and production costs of Al servers, and achieving multi-purpose functionality with a single machine and flexible adaptability.

It should also be noted that in the specification, relational terms such as first and second are only used to distinguish one entity or operation from another entity or operation, and do not necessarily require or imply that such an actual relationship or order exists between these entities or operations. Moreover, the terms "include", "contain", or any other variants thereof are intended to cover a non-exclusive inclusion, such that a process, a method, an article, or a device that includes a series of elements not only includes those elements but also includes other elements that are not expressly listed, or further includes elements inherent to such process, method, article, or device. In the absence of more restrictions, an element defined by the phrase "including a ..." does not exclude an additional identical element in the process, the method, the article, or the device that includes the element.

With respect to the above-mentioned description of the disclosed embodiments, those skilled in the art can implement or use this application. Various modifications to these embodiments are apparent to those skilled in the art, and the general principle defined herein may be implemented in other embodiments without departing from the spirit or scope of this application. Therefore, this application will not be limited to the embodiments shown herein but needs to conform to a widest scope consistent to the principles and novel characteristics disclosed herein.

## Claims

1. An interconnection apparatus, comprising a plurality of switching devices, wherein each switching device of the plurality of switching devices comprises a plurality of external interfaces and a plurality of interconnection interfaces, each of the external interfaces of the switching device is configured to connect to an external device, an interconnection interface of a first switching device is selectively connected to an interconnection interface of a second switching device, the first switching device is any one of the plurality of switching devices, and the second switching device is any one of the plurality of switching devices other than the first switching device; and
the first switching device further comprises an embedded controller, the embedded controller is configured to receive topology configuration information, and control, in a case where it is determined based on the topology configuration information that a target interface exists among the plurality of interconnection interfaces of the first switching device in which the embedded controller is located, the target interface to connect to the interconnection interface of the second switching device, so as to interconnect any two of external devices connected to the plurality of switching devices.

2. The interconnection apparatus according to claim 1, wherein the embedded controller is further configured to enumerate external devices connected to the first switching device in which the embedded controller is located and external devices connected to the second switching device that is connected to the target interface to determine global identifiers comprising a global identifier of each external device among the external devices connected to the first switching device and the external devices connected to the second switching device, and establish an internal routing table based on the global identifiers to transmit received data using the internal routing table, wherein the global identifier of the external device comprises a device identifier of the external device and a device identifier of a switching device to which the external device is connected.

3. The interconnection apparatus according to claim 2, wherein the embedded controller is further configured to receive interface configuration information, and adjust one or more interface parameters of one or more external interfaces of the plurality of external interfaces of the first switching device based on the interface configuration information, to make the adjusted one or more interface parameters of the one or more external interfaces match one or more communication parameters of one or more external devices connected to the one or more external interfaces.

4. The interconnection apparatus according to claim 1, wherein in a case where it is determined based on the topology configuration information that a target interface exists among the plurality of interconnection interfaces of the first switching device, a process of controlling the target interface to connect to the interconnection interface of the second switching device comprises:
in a case where it is determined based on the topology configuration information that the target interface exists among the plurality of interconnection interfaces of the first switching device, enabling the target interface to connect to an enabled target interface of the second switching device; and
disabling interconnection interfaces other than the target interface among the plurality of interconnection interfaces of the first switching device.

5. The interconnection apparatus according to any one of claims 1 to 4, wherein the plurality of switching devices are n switching devices, each of the n switching devices has n-1 interconnection interfaces, n is an integer greater than 1, a j-th interconnection interface of an i-th switching device among the n switching devices is selectively connected to an i-th interconnection interface of a (j+1)-th switching device among the n switching devices, i = 1, 2, ..., n-1, and j = i, ..., n-1.

6. A high-performance switching apparatus, comprising:
the interconnection apparatus according to any one of claims 1 to 5, wherein the interconnection apparatus comprises a plurality of switching devices, each switching device of the plurality of switching devices comprises an embedded controller, and the embedded controller comprises a plurality of configuration registers;
a management apparatus, configured to receive a user configuration instruction, determine topology configuration information and/or interface configuration information based on the user configuration instruction, determine configuration parameter sets, which comprise a configuration parameter set for each switching device of the switching devices, according to the topology configuration information and/or the interface configuration information, and write each configuration parameter value of each configuration parameter set of the configuration parameter sets into a corresponding configuration register among the configuration registers of the embedded controller of a corresponding switching device among the switching devices respectively; and
a power supply apparatus, configured to supply power to the interconnection apparatus and the management apparatus.

7. The high-performance switching apparatus according to claim 6, wherein the management apparatus comprises a plurality of management controllers, each of the plurality of management controllers is connected to the interconnection apparatus; and
a current interaction controller is configured to perform data interaction with the interconnection apparatus; wherein the current interaction controller is any one of the plurality of management controllers that is in a normal operating status.

8. The high-performance switching apparatus according to claim 7, further comprising a complex programmable logic device,
wherein each of the plurality of management controllers is further configured to send heartbeat signals to the complex programmable logic device at preset intervals; and
the complex programmable logic device is configured to determine whether a faulty controller in an abnormal operating status exists among the plurality of management controllers, in a case where it is determined that the faulty controller in an abnormal operating status exists among the plurality of management controllers, determine whether the faulty controller is the current interaction controller, in a case where it is determined that the faulty controller is the current interaction controller, control the faulty controller to stop performing data interaction with the interconnection apparatus, and select any one of the plurality of management controllers that is in the normal operating status as a new current interaction controller, wherein the abnormal operating status is an operating status in which the heartbeat signals are not sent at the preset intervals.

9. The high-performance switching apparatus according to claim 8, wherein the plurality of management controllers comprise a primary management controller and one or more secondary management controllers, and the one or more secondary management controllers are management controllers other than the primary management controller among the plurality of management controllers; and
the complex programmable logic device is further configured to, in a case where it is determined that the current interaction controller is one of the one or more secondary management controllers and that the primary management controller in the normal operating status exists, control the current interaction controller to stop performing data interaction with the interconnection apparatus and select one primary management controller in the normal operating status from the at least one primary management controller as the new current interaction controller.

10. The high-performance switching apparatus according to claim 8, wherein the high-performance switching apparatus further comprises a first switching apparatus, a plurality of first ends of the first switching apparatus are connected to the plurality of management controllers in a one-to-one correspondence, a plurality of second ends of the first switching apparatus are connected to the plurality of switching devices in a one-to-one correspondence, and a control end of the first switching apparatus is connected to the complex programmable logic device;
the complex programmable logic device is configured to determine whether a faulty controller in the abnormal operating status exists among the plurality of management controllers, in a case where it is determined that the faulty controller in the abnormal operating status exists among the plurality of management controllers, determine whether the faulty controller is the current interaction controller, in a case where it is determined that the faulty controller is the current interaction controller, generate a first control instruction corresponding to the faulty controller, select one of the plurality of management controllers that is in the normal operating status as a new current interaction controller, and generate a second control instruction corresponding to the new current interaction controller; and
the first switching apparatus is configured to, when receiving the first control instruction, determine a first target end based on the first control instruction and disconnect communication links between a management controller connected to the first target end and the plurality of switching devices, and when receiving the second control instruction, determine a second target end based on the second control instruction and connect communication links between a management controller connected to the second target end and the plurality of switching devices.

11. The high-performance switching apparatus according to claim 10, wherein the high-performance switching apparatus further comprises a first port expansion device, wherein a first end of the first port expansion device is connected to one of the plurality of second ends of the first switching apparatus, and a plurality of second ends of the first port expansion device are connected to the plurality of switching devices in a one-to-one correspondence.

12. The high-performance switching apparatus according to claim 8, wherein a process of performing data interaction with the interconnection apparatus comprises:
writing each configuration parameter of each configuration parameter set of the configuration parameter sets into the corresponding configuration register among the configuration registers of the embedded controller of the corresponding switching device among the switching devices respectively; and
acquiring status parameters comprising a status parameter of each of the plurality of switching devices and device parameters comprising a device parameter of each of external devices connected to each of the plurality of switching devices;
wherein the high-performance switching apparatus further comprises a prompt apparatus; and
a first baseboard controller connected to the plurality of management controllers, wherein the first baseboard controller is configured to determine a current topological status of the interconnection apparatus based on the status parameters and generate a current status prompt instruction based on the current topological status; and
wherein the complex programmable logic device is further configured to, in response to the current status prompt instruction, control the prompt apparatus to prompt current topological status information.

13. The high-performance switching apparatus according to claim 12, wherein the high-performance switching apparatus further comprises a heat dissipation apparatus, and the heat dissipation apparatus comprises one or more fans;
the first baseboard controller is further configured to generate a current heat dissipation control instruction based on the current topological status and the device parameters; and
the complex programmable logic device is further configured to, in response to the current heat dissipation control instruction, adjust a rotational speed of at least one of the one or more fans.

14. The high-performance switching apparatus according to any one of claims 12 to 13,
wherein the first baseboard controller, the plurality of management controllers, the complex programmable logic device, and the interconnection apparatus are interconnected via Ethernet; and
the first baseboard controller, the plurality of management controllers, the complex programmable logic device, and the interconnection apparatus are interconnected via a Universal Serial Bus or an Inter-Integrated Circuit bus.

15. A large model all-in-one machine, comprising:
the high-performance switching apparatus according to any one of claims 6 to 14;
a plurality of general-purpose computing devices connected to the interconnection apparatus of the high-performance switching apparatus; and
a plurality of heterogeneous computing devices connected to the interconnection apparatus;
wherein any two computing devices connected to the interconnection apparatus are interconnected, and each of the two computing devices is one of the plurality of general-purpose computing devices or one of the plurality of heterogeneous computing devices.

16. The large model all-in-one machine according to claim 15, wherein the large model all-in-one machine further comprises a second baseboard controller and a plurality of second switching apparatuses;
wherein first ends of the plurality of second switching apparatuses are connected to the plurality of heterogeneous computing devices in a one-to-one correspondence, a second end of each of the plurality of second switching apparatuses is connected to the second baseboard controller, and a third end of each of the plurality of second switching apparatuses is connected to the high-performance switching apparatus.

17. The large model all-in-one machine according to claim 15, wherein the large model all-in-one machine further comprises a plurality of network interface cards, the interconnection apparatus comprises a plurality of switching devices, and each of the plurality of switching devices is connected to at least one of the plurality of network interface cards to cause the heterogeneous computing devices connected to the interconnection apparatus to form a network with one or more other large model all-in-one machines via one or more of the plurality of network interface cards.

18. The large model all-in-one machine according to claim 15, wherein the interconnection apparatus comprises a plurality of switching devices, the large model all-in-one machine further comprises a plurality of network interface cards, the heterogeneous computing devices are connected to the plurality of switching devices via at least one of the plurality of network interface cards to cause the heterogeneous computing devices to form a network with one or more other large model all-in-one machines via one or more of the plurality of network interface cards.

19. The large model all-in-one machine according to claim 15, wherein the large model all-in-one machine further comprises at least one memory expansion cards;
the at least one memory expansion cards is configured to store data to be processed;
each of the plurality of general-purpose computing devices is configured to determine a size of a local memory, and in a case where the size of the local memory is less than a preset value, write the data to be processed into one or more of the at least one memory expansion card.

20. The large model all-in-one machine according to claim 19, wherein each of the at least one memory expansion card comprises a third baseboard controller and a plurality of memory controllers, and each of the plurality of memory controllers is mounted with at least one memory module;
the third baseboard controller is configured to receive and forward a memory access instruction sent by a general-purpose computing device among the plurality of general-purpose computing devices, acquire status parameters comprising a status parameter of each of the plurality of memory controllers, and acquire and send target data converted into serial data format to the general-purpose computing device; and
each of the plurality of memory controllers is configured to parse memory access data in the memory access instruction, and in a case where the memory access data is data to be written, convert the data to be written from a serial data format to a parallel data format to obtain the data to be written in the parallel data format and write the data to be written in the parallel data format into one or more of the at least one memory module mounted thereto, and in a case where the memory access data is data to be read, read target data from one or more of the at least one memory module mounted thereto based on the data to be read, and convert the target data from the parallel data format into the serial data format to obtain the target data in the serial data format, and forward the target data in the serial data format to the third baseboard controller.

21. The large model all-in-one machine according to any one of claims 15 to 20, wherein the large model all-in-one machine further comprises a pooling management engine;
each of the plurality of general-purpose computing devices is further configured to initiate a dynamic heterogeneous resource adjustment request;
the pooling management engine is configured to, when receiving the dynamic heterogeneous resource adjustment request, determine a heterogeneous computing device to be adjusted from the plurality of heterogeneous computing devices based on the dynamic heterogeneous resource adjustment request, perform a hot removal operation on the heterogeneous computing device to be adjusted, send a location acquisition request corresponding to the heterogeneous computing device to be adjusted to the high-performance switching apparatus, send, based on received physical location information, a reset execution instruction to the heterogeneous computing device to be adjusted, and when receiving a reset completion instruction, determine the heterogeneous computing device to be adjusted as a heterogeneous computing device to be allocated, and when receiving a reallocation instruction, allocate the heterogeneous computing device to be allocated to a general-purpose computing device corresponding to the reallocation instruction among the general-purpose computing devices;
each of the plurality of heterogeneous computing devices is configured to perform a reset operation after receiving the reset execution instruction and generate the reset completion instruction after successfully executing the reset operation; and
the high-performance switching apparatus is configured to, after receiving the location acquisition request, acquire the physical location information of the heterogeneous computing device to be adjusted and return the physical location information to the pooling management engine.
